Europäisches Patentamt

European Patent Office

Office européen des brevets

(19)

(11) Veröffentlichungsnummer : **0 135 709**
**B1**

(12)     **EUROPÄISCHE PATENTSCHRIFT**

(45) Veröffentlichungstag der Patentschrift :
27.05.87

(51) Int. Cl.⁴ : **B 23 Q 27/00**

(21) Anmeldenummer : **84108842.0**

(22) Anmeldetag : **26.07.84**

(54) **Verfahren zur Herstellung von Werkstücken mit polygonaler Aussen-und/oder Innenkontur und Vorrichtungen zur Durchführung des Verfahrens.**

(30) Priorität : **01.08.83 DE 3327681**
**04.05.84 DE 3416430**

(43) Veröffentlichungstag der Anmeldung :
**03.04.85 Patentblatt 85/14**

(45) Bekanntmachung des Hinweises auf die Patenterteilung : **27.05.87 Patentblatt 87/22**

(84) Benannte Vertragsstaaten :
**AT BE CH DE FR GB IT LI LU NL SE**

(56) Entgegenhaltungen :
**WO-A-84 /000 18**
**CH-A-     274 321**
**CH-A-     330 925**
**DE-A- 2 355 036**
**DE-C-     506 943**
**DE-C-     513 327**
**Soviet Inventions Illustrated Woche D 06, 18 März**
**1981 Sektion P54 & SU-A-738771**

(73) Patentinhaber : **Ley, Hans**
**Dr. Wirtz-Strasse 30**
**D-5203 Much (DE)**

(72) Erfinder : **Ley, Hans**
**Dr. Wirtz-Strasse 30**
**D-5203 Much (DE)**

(74) Vertreter : **Langmaack, Jürgen, Dipl.-Ing. et al**
**Patentanwälte Maxton . Maxton . Langmaack Golts-**
**teinstrasse 93 Postfach 51 08 06**
**D-5000 Köln 51 (DE)**

**0 135 709**

**Beschreibung**

Die Erfindung betrifft ein Verfahren zur Herstellung von Werkstücken mit polygonaler Außen- und/oder Innenkontur vorzugsweise durch spanabhebende Bearbeitung, wobei das zu bearbeitende Werkstück um eine ortsfeste Achse mit konstanter Geschwindigkeit rotiert, während das Werkzeug auf einer in sich geschlossenen Bahnkurve geführt wird, wobei die Drehgeschwindigkeit des Werkstücks und die Umlaufgeschwindigkeit des Werkzeugs auf seiner Bahnkurve voneinander abhängig sind und wobei ferner das Werkzeug während des gesamten Umlaufs am Werkstück angreift, wobei zur Erzeugung einer vorgegebenen Polygonkontur die ortsfeste Drehbewegung des Werkstücks und die Bewegung des Werkzeugs auf seiner exzentrisch zur Werkstückdrehachse verlaufenden Bahnkurve überlagert werden und wobei die Bahnkurve die Drehachse des Werkstücks umschließt.

Aus der DE-A-23 55 036 ist ein Verfahren bekannt, bei dem das Werkzeug in bezug auf das Werkstück auf einer Ellipsenbahn geführt wird. Durch die Überlagerung der Drehbewegung des Werkstücks und der Bewegung des eine Ellipsenbahn durchlaufenden Werkzeugs lassen sich entsprechende Polygonkonturen, auch solche mit scharf ausgezogenen Ecken erzeugen. Bei der Umsetzung in die Praxis ergeben sich für das vorbekannte Verfahren Nachteile, so beispielsweise eine erhebliche Reduzierung der Arbeitsgeschwindigkeiten, da die Getriebe zur Erzeugung der elliptischen Bewegung des Werkzeugs nur begrenzte Drehzahlen zulassen. Ein weiterer Nachteil der vorbekannten Verfahrensweise liegt darin, daß das zur Erzeugung des Bewegungsgesetzes erforderliche Getriebe verhältnismäßig groß gebaut werden muß und dementsprechend zur Erzeugung von Polygonen mit unterschiedlichen Durchmessern eine Hebeluntersetzung vorgesehen werden muß, die nur schwierig mit der erforderlichen Steifigkeit ausgeführt werden kann. Die für die Bahnkurve maßgeblichen Parameter sind hier fest miteinander verknüpft, so daß nur noch die Größe der Bahnkurve durch eine Übersetzungsstange veränderbar ist, während ihre Gestalt nicht veränderbar ist. Ein weiterer Nachteil besteht darin, daß durch die Übersetzungsstange zusätzliche « Elastizität » in der Vorrichtung vorhanden ist, die die Maßgenauigkeit insbesondere bei Serienproduktion beeinträchtigt.

Zur Herstellung von Werkstücken mit polygonaler Außen- und/oder Innenkontur sind weiterhin in CH-A-330 925 sowie SU-A-738 771 Verfahren angegeben, die jedoch dadurch zu charakterisieren sind, daß das Werkzeug mit konstanter Bahngeschwindigkeit auf einer Kreisbahn geführt ist, wobei die Bahnkurve des Werkzeugs die Werkstückdrehachse nicht umschließt. Hierdurch ergeben sich hinsichtlich der erzeugbaren Polygone erhebliche Beschränkungen, insbesondere ist es nicht möglich, bei dem Verfahren nach der erstgenannten Druckschrift Polygone mit scharf ausgezogenen Ecken und bei dem Verfahren gemäß der nächstgenannten Druckschrift Polygone mit abgerundeten Ecken zu erzeugen.

Bei dem Verfahren gemäß der CH-A-274 321 ist zwar eine von der Kreisbahn abweichende Bahnkurve für das Werkzeug bekannt. Dieses Verfahren erlaubt jedoch nur Bewegungen auf einer Ellipsenbahn, so daß von daher schon eine Beschränkung in der Zahl der möglichen Polygonkonturen gegeben ist. Hinsichtlich der Vorrichtung zur Durchführung des vorbekannten Verfahrens ist festzustellen, daß auch hier wiederum das Werkzeug auf einer Art Kreuzschlitten geführt ist, so daß sich die geschlossene Bahnkurve aus einer Überlagerung von zwei Translationsbewegungen ergibt, so daß hier aufgrund der ständigen Bewegungsumkehr alle Lagerspiele in vollem Umfang sich auf die Präzision der zu erzeugenden Polygonkontur nachteilig auswirken.

Aus der DE-C-513 327 ist ferner ein Verfahren bekannt, bei dem das drehende Werkstück gleichzeitig auf einer Kreisbahn bewegt wird, während das Werkzeug selbst stillsteht, allenfalls Schwenkbewegungen ausführt, um einen konstanten Eingriffswinkel zwischen Werkzeug und Werkstück zu erhalten. Mit diesem Verfahren lassen sich innerhalb gewisser Grenzen Werkstücke mit epi- oder hypozykloidischer Kontur herstellen. Ein wesentlicher Nachteil dieses Verfahrens besteht jedoch darin, daß das Werkstück selbst außer der Drehbewegung um seine Körperachse auch noch auf einer exzentrisch hierzu liegenden Kreisbahn geführt wird, so daß hier erhebliche Beschränkungen in der Arbeitsgeschwindigkeit hingenommen werden müssen, da wegen der entsprechend dem Arbeitsfortschritt abnehmenden Masse des Werkstücks keine einwandfreie Auswuchtung des Systems möglich ist. Alle Unwuchten machen sich unverzüglich negativ sowohl bei der erzielbaren Oberflächengüte als auch bei der erzielbaren Maßgenauigkeit bemerkbar.

Schließlich ist aus der prioritätsälteren, als nicht gemäß Art. 54131 EPÜ vorveröffentlicht geltenden EP-A2-0 097 346 ein Verfahren bekannt, bei dem das Werkzeug auf einer Kreisbahn geführt wird, die entweder seitlich an der Werkstückkontur anliegend zwischen In- und Umkreis der zu erzeugenden Polygonkontur verläuft oder aber in einer anderen Ausgestaltung die Werkstückdrehachse umschließend zwischen In- und Umkreis der Polygonkontur verläuft. Bei diesem Verfahren erfolgt die zur Erzeugung einer vorgegebenen Kontur erforderliche Abstimmung der einzelnen Parameter zueinander, d. h. Drehgeschwindigkeit des Werkstücks um seine ortsfeste Achse, Durchmesser der Bahnkurve und Bahngeschwindigkeit des Werkzeuges dadurch, daß das Werkzeug abgesehen von Sonderfällen, seine Bahnkurve mit einer sich jeweils während eines Umlaufes periodisch ändernden Geschwindigkeit durchläuft, wobei insbesondere das Bewegungsgesetz für die Bahngeschwindigkeit des Werkzeuges einstellbar ist. Ein wesentlicher Vorteil dieses Verfahren liegt darin, daß praktisch beliebige Polygonkonturen herstellbar sind, wobei die Grenze hinsichtlich der Polygonkontur lediglich durch die

2

Eingriffsbedingungen zwischen Werkzeug und Werkstück gesetzt ist.

Der Erfindung liegt nun die Aufgabe zugrunde, das zuletzt erörterte Verfahren und die zugehörige Vorrichtung noch zu verbessern, so daß es höhere Arbeitsgeschwindigkeiten und bessere Verstellmöglichkeiten der einzelnen Parameter bietet. Ferner soll eine hohe Präzision möglich sein, so daß auch für die Serienfertigung genaue Passungen hergestellt werden können, wie sie z. B. für Wellen-Naben-Verbindungen erforderlich sind. Darüber hinaus soll ein wesentlich einfacherer Getriebeaufbau ermöglicht werden.

Diese Aufgabe wird gemäß der Erfindung verfahrensmäßig dadurch gelöst, daß das Werkzeug auf einer von einem Kreis abweichenden, in sich geschlossenen Bahnkurve umlaufend geführt wird, die von dem Werkzeug mit einer nach einem vorgegebenen Bewegungsgesetz jeweils während eines Umlaufs sich ändernde Bewegungsgeschwindigkeit durchlaufen wird und daß die Bahnkurve des Werkzeugs im Raum dadurch erzeugt wird, daß das Werkzeug auf einer ersten Kreisbahn $R_1$ geführt wird, mit vorzugsweise konstanter Winkelgeschwindigkeit, bezogen auf die Drehachse dieser Kreisbahn, wobei die Drehachse ihrerseits, je nach der gewünschten Bahnkurve, gleichsinnig oder gegenläufig auf einer zweiten Kreisbahn $R_2$ umläuft, und daß zur Veränderung der Form der Bahnkurve der Radius der ersten Kreisbahn und der Radius der zweiten Kreisbahn sowie die Phasenlage der umlaufenden Radien $R_1$ und $R_2$ frei einstellbar sind.

Da die vom Werkzeug durchlaufene Bahnkurve im Umkreis des zu erzeugenden Polygonprofils verläuft und hierbei den Inkreis des zu erzeugenden Polygonprofils umfaßt, erlaubt es die Vorgabe einer Bahnkurve, die in etwa in der Größenordnung des Durchmessers des zu erzeugenden Polygonprofils liegt. Damit ergeben sich grundsätzlich günstigere Eingriffswinkel für das Werkzeug, was insbesondere bei einer spanabhebenden Bearbeitung, beispielsweise durch Drehen Vorteile bringt. Werkzeugbewegungen nach Art des Schlagdrehfräsens sind ebenfalls möglich, d. h. diskontinuierlicher Werkzeugeingriff bei einem Umlauf. Der Vorteil liegt bei der Erfindung in den weiten Variationsmöglichkeiten für die Bahnkurve.

Dieses Verfahren der Werkzeugführung hat auch Vorteile gegenüber dem bisher bekannten Verfahren, da es Getriebe mit einfacherem Aufbau ermöglicht, die darüber hinaus in bezug auf die Veränderung der Bahnkurve für das Werkzeug die freie Einstellbarkeit von zwei Parametern, nämlich Radien der beiden Kreisbahnen ermöglichen. Der besondere Vorteil dieser Verfahrensweise liegt darin, daß bei gleichsinniger Drehrichtung eine Epizykloide durch eine Überlagerung von zwei Kreisbahnen erzielt wird, ohne daß hierfür ein Umlaufrädergetriebe herkömmlicher Art benötigt wird, was einen einfachen kompakten Getriebeaufbau ermöglicht. Zur Erzeugung einer Pascalschen Kurve läuft die Drehachse der Werkzeugkreisbahn mit der doppelten Winkelgeschwindigkeit des Werkzeugs auf der zweiten Kreisbahn um. Bei dieser Überlagerung beschreibt die Werkzeugspitze im Raum entsprechend der Einstellung der Parameter eine Epizykloide.

Bei gegenläufiger Drehrichtung beschreibt die Werkzeugspitze im Raum entsprechend der Einstellung der Parameter eine Hypozykloide. Zur Erzeugung einer Ellipse läuft die Drehachse der Werkzeugkreisbahn mit der gleichen Winkelgeschwindigkeit, wie das Werkzeug auf der zweiten Kreisbahn um. Auch diese Anordnung erlaubt gegenüber den bisher bekannten Verfahren einen sehr kompakten einfachen Getriebeaufbau mit vielfältigen Variationsmöglichkeiten. Der besondere Vorteil liegt darin, daß vom Verfahren her praktisch keine Drehzahlgrenze gesetzt ist, da es sich bei allen Drehbewegungen grundsätzlich um gleichförmige Drehbewegungen handelt. Das hat zur Folge, daß keine wechselnden Drehmomente und damit auch keine Lastwechsel auftreten. Bei der Verwendung von Zahnradgetrieben bedeutet dies, daß die Zähne immer einseitig anliegen und das Zahnflankenspiel keinen Einfluß hat. Auch das Lagerspiel der Wellen einer entsprechend gebauten Vorrichtung macht sich praktisch nicht bemerkbar, da die Wellen aufgrund des gleichbleibenden Drehmomentes immer an einer Stelle im Lager anliegen. Da jede der zur Darstellung der jeweiligen Bahnkurve erforderliche Kreisbewegung auswuchtbar ist, ergeben sich verfahrensbedingt, kaum Drehschwingungen des Gesamtsystems, so daß sich optimale Arbeitsergebnisse hinsichtlich Oberflächengüte und Maßgenauigkeit erzielen lassen.

In einer bevorzugten Ausgestaltung des Verfahrens ist vorgesehen, daß die Bahnkurve eine Epizykloide, insbesondere eine Pascalsche Kurve ist. Durch eine Überlagerung der Drehbewegung des Werkstücks und einer hierzu vom Werkzeug vorzugsweise gleichsinnig durchlaufenen Pascalschen Kurve, die entsprechend dem erfindungsgemäßen Verfahren so geführt ist, daß sie die Drehachse des Werkstücks umfaßt, lassen sich bei entsprechender Wahl für die Pascalsche Kurve und einem entsprechend vorgegebenen Drehzahlverhältnis zwischen Werkstückdrehzahl und Werkzeugdrehzahl beispielsweise Polygonkonturen mit im wesentlichen geraden Seiten und im wesentlichen scharfen Ecken erzeugen. Die Polachse der Pascalschen Kurve, die durch die Verbindungslinie der Scheitelpunkte mit dem Pol der Kurve definiert ist, muß die Drehachse des Werkstücks hierbei orthogonal schneiden. Der Pol der Kurve ist hierbei dann radial zur Drehachse des Werkstücks verschoben, wobei der Umkreis der zu erzeugenden Polygonkontur vom polnahen Scheitelpunkt der Kurve und der Inkreis der zu erzeugenden Polygonkontur vom polfernen Scheitelpunkt der Pascalschen Kurve tangiert wird. Durch eine Änderung der Zuordnung der Pascalschen Kurve zur Drehachse des Werkstücks, beispielsweise durch radiale Verschiebung des Pols der Pascalschen Kurve gegenüber der Drehachse des Werkstücks läßt sich bei vorgegebener Pascalscher Kurve eine Vielzahl von Variationen erzielen. Ändert man die Zuordnung der Pascalschen Kurve in der Weise, daß der polnahe Scheitelpunkt den Inkreis und der polferne Scheitelpunkt den Umkreis der Polygonkontur tangiert, können durch entsprechende Einstellung der Parameter stark konkave Flanken bei großen Eckenradien erzeugt werden. Derartige Polygonprofile stellen ideale Profilformen für Kupplungen und Welle-Nabe-Verbindungen dar. Die konkaven Flanken ergeben günstige Anlagewinkel und damit eine geringe Nabenaufweitung und die großen Eckenradien ergeben andererseits eine Reduzierung der Kerbwirkung.

Verschiebungen der Pascalschen Kurve in der Weise, daß In- und Umkreis der zu erzeugenden Polygonkontur nicht von den Scheitelpunkten, sondern von anderen Stellen der Bahnkurve tangiert werden, also wenn die Bahnkurve relativ zum Werkstück verdreht ist, ergeben je nach Drehrichtung unsymmetrische Polygonkonturen. Die Wahl der jeweils zu verwendenden Pascalschen Kurve ergibt sich aus der gewünschten Polygonkontur.

Wählt man die Drehrichtung von Werkstück und Werkzeug gegensinnig, so ergibt sich in Werkstücklängsrichtung entsprechend dem eingestellten Vorschub ein wendelförmiger Verlauf der Polygonkontur.

In einer anderen vorteilhaften Ausgestaltung des erfindungsgemäßen Verfahrens ist vorgesehen, daß die Bahnkurve eine Hypozykloide, insbesondere eine Ellipse ist. Es ist zwar aus dem zum Stande der Technik bekannten Verfahren bekannt, als Bahnkurve für das Werkzeug der Drehung des Werkstücks eine Ellipsenbahn zu überlagern. Bei der vorbekannten Anordnung entspricht das Drehzahlverhältnis zwischen Werkstückdrehzahl und Werkzeugdrehzahl der Eckenzahl des Polygons. Hierbei dreht sich das Werkstück um eine Periode, d. h. von einer Ecke zur nächsten, während das Werkzeug auf einer Ellipsenbahn einen vollen Umlauf macht. Bei der erfindungsgemäßen Zuordnung von Werkzeugbahn und Werkstück, bei der die Werkzeugbahn (Epi- oder Hypozykloide) die Drehachse des Werkstücks umschließt, entspricht die Drehzahldifferenz zwischen Werkstückdrehzahl und Werkzeugdrehzahl der Eckenzahl des Polygons. Es gilt für Pascal'sche Kurve und Ellipse als Werkzeugbahn

$$E = \frac{1}{1 - \frac{n_1}{n_2}} \quad \text{oder} \quad E = \frac{1}{1 - \frac{n_2}{n_1}} \cdot 1$$
$$(\text{für } n_2 > n_1) \qquad\qquad (\text{für } n_1 > n_2)$$

wobei E = Eckenzahl, $n_1$ = Werkstückdrehzahl und $n_2$ = Werkzeugdrehzahl ist.

Die Zuordnung von Ellipsenbahnen als Werkzeugbahn zum Werkstück ergibt gegenüber der Pascalschen Kurve zusätzliche Möglichkeiten, weil sie gegenüber der Pascalschen Kurve mit einer Symmetrie über 180° eine Symmetrie über 90° aufweist. Neben der normalen Anordnung, wie bereits beschrieben, d. h. In- und Umkreis der zu erzeugenden Polygonkontur werden nach 180° tangiert, können Ellipsenbahnen auch symmetrisch zur Drehachse des Werkstücks angeordnet werden. Es entstehen gegenüber der vorher beschriebenen Anordnung Polygonkonturen mit doppelter Eckenzahl. Ferner können durch entsprechende allseitige radiale Verschiebungen unregelmäßige Polygonkonturen erzeugt werden, welche zwei Inkreise und/oder zwei Umkreise besitzen.

Die Erfindung betrifft ferner eine Vorrichtung zur Herstellung von Werkstücken mit polygonaler Außen- und/oder Innenkontur, mit einer drehbar gelagerten, angetriebenen Werkstückaufnahme und einem Werkzeug, das entlang einer geschlossenen Bahnkurve geführt ist und das mit dem Antrieb der Werkstückaufnahme in Verbindung steht, insbesondere zur Durchführung des erfindungsgemäßen Verfahrens, die aber auch in konventioneller Zuordnung der Bahnkurve, d. h. seitlich zur Werkstückkontur eingesetzt werden kann, d. h. ohne daß die Bahnkurve die Werkstückdrehachse umschließt, so daß rotierende Werkzeuge, wie Schleifscheiben oder Fräser auch mit größerem Durchmesser einsetzbar sind.

Die erfindungsgemäße Vorrichtung ist gekennzeichnet durch einen in einem Gestell drehbar gelagerten angetriebenen Kurbelarm, mit dessen Kurbelzapfen ein Lager in bezug auf seinen Abstand $R_2$ zur Kurbelwelle einstellbar verbunden ist und einen mit dem Lager um eine parallel zur Kurbelwelle liegende Drehachse drehbar verbundenen Werkzeugträger mit einer Werkzeugaufnahme, deren Abstand $R_1$ zur Drehachse des Werkzeugträgers einstellbar ist, sowie durch Antriebsmittel, durch die Werkzeugträger und Kurbelarm hinsichtlich Drehrichtung, Winkelgeschwindigkeit und Phasenlage zueinander in Abhängigkeit voneinander antreibbar sind, sowie durch eine mit dem Gestell verbundene Verstelleinrichtung, mit der der radiale Abstand allseitig und/oder die Ausrichtung der Drehachse des Kurbelarmes zur Werkstückdrehachse einstellbar ist. Diese Anordnung ergibt einen sehr kompakten Getriebeaufbau mit freier Einstellbarkeit für den Bahnradius des Lagers einerseits und für den Bahnradius der Werkzeugaufnahme andererseits. Die Form und die Größe der jeweils gewünschten Bahnkurve für das Werkzeug selbst läßt sich frei einstellen, so daß Polygonprofile für einen großen Durchmesserbereich herstellbar sind. Als Antriebsmittel ist zweckmäßigerweise ein Wechselrädergetriebe vorgesehen. Dies erlaubt es nun, an dieser Vorrichtung das Drehzahlverhältnis zwischen der Drehung des Werkzeugträgers einerseits und der Kurbel andererseits je nach der geforderten Polygonkontur vorzugeben. Ein weiterer Vorteil besteht darin, daß mit einem entsprechend ausgebildeten Wechselrädergetriebe auch der Drehsinn von Werkzeugträger und Kurbelarm zueinander geändert werden kann, so daß mit der gleichen Vorrichtung als Bahnkurve für das Werkzeug sowohl eine Epizykloide, beispielsweise Pascalsche Kurven oder eine Hypozykloide, beispielsweise Ellipsen vorgegeben werden können. Durch die mit dem Gestell verbundene Verstelleinrichtung kann darüber hinaus die Exzentrizität der Bahnkurve des Werkzeugs gegenüber der Drehachse des Werkstücks eingestellt werden. Bei einer parallelen Ausrichtung der Drehachse des

4

Werkzeugträgers zur Werkstückachse ergeben sich Polygone mit parallel verlaufenden Mantellinien. Die Vorrichtung ist zusätzlich mit einer Vorschubeinrichtung versehen, wodurch das Werkzeug in Längsrichtung, d. h. in Richtung der Drehachse der Werkstückaufnahme verschoben werden kann.

Anstelle eines Getriebes können als Antriebsmittel auch zwei Einzelmotore für die überlagerten Drehbewegungen von Kurbelarm und Werkzeugträger vorgesehen werden, die hinsichtlich Drehrichtung, Drehzahl und Phasenlage der zugeordneten Teile (Werkstück, Kurbelarm und Werkzeugträger) in Abhängigkeit zu einander beispielsweise elektronisch gekoppelt sind.

Zur Herstellung von konischen oder in Längsrichtung profilierten Werkstücken mit polygonalem Querschnitt wird die Vorrichtung mit zusätzlichen Einrichtungen versehen, die entsprechend dem gewünschten Konuswinkel während des Betriebes den Radius $R_1$ und ggf. die Exzentrizität und/oder den Radius $R_2$ verstellen.

Neben der Herstellung von regelmäßigen Polygonprofilen, für welche die angegebenen Formeln gelten, können durch entsprechende Wahl der Übersetzungsverhältnisse auch völlig unregelmäßige jedoch in sich geschlossene Polygonkonturen erzeugt werden.

Zur Herstellung von Werkstücken mit in Längsrichtung wendelförmigen Polygonkonturen ist zwischen Werkstück- und Werkzeugdrehzahl ein Übersetzungsverhältnis zu wählen, welches, je nach der gewünschten Steigung des Wendels und dem gewählten Vorschub in Längsrichtung, von dem, der gewünschten Eckenzahl entsprechenden Verhältnis abweicht. Bei entsprechender Wahl der Parameter ergeben sich auch bei gegensinnigem Drehsinn von Werkstück- und Werkzeugdrehung polygonförmige Wendel mit entsprechender Steigung. Durch entsprechende Wahl des Übersetzungsverhältnisses zwischen Werkstück und Werkzeugdrehung können auch Polygonkonturen erzeugt werden, welche sich überschneiden, so daß durch mehrmaligen Umlauf des Werkstücks bei diskontinuierlichem Eingriff, bzw. durch eine der Eckenzahl des Profils entsprechende Anordnung von mehreren Werkzeugen auf den Werkzeugträgern, wie es von Schlagdrehfräsen bekannt ist, sich als Werkstückkonturen der Kern der jeweiligen Polygonkontur ergibt. Die Kopplung zwischen Werkstückaufnahme und Werkzeug kann durch Zahnräder mit entsprechendem Übersetzungsverhältnis und eine Vorgelegewelle erfolgen. Eine elektronische Kopplung ist ebenfalls möglich. Sie bietet den Vorteil, daß relativ einfach, insbesondere zur Herstellung von wendelförmigen Werkstücken jedes gewünschte Übersetzungsverhältnis stufenlos eingestellt werden kann.

In einer Ausgestaltung der erfindungsgemäßen Vorrichtung ist vorgesehen, daß das Getriebe als Rädergetriebe ausgebildet ist, dessen Antriebsrad mit dem Kurbelzapfen fest verbunden ist und wenigstens ein Zwischenrad antreibt, das am vorzugsweise parallelgeführten Lagerträger gelagert ist, und daß das Zwischenrad mit einem Abtriebsrad in Verbindung steht, das mit der Welle des Werkzeugträgers fest verbunden ist. Diese Ausgestaltung erlaubt die Verwendung eines verhältnismäßig großen Lagerträgers, der ausreichend Platz zur Aufnahme eines Wechselrädergetriebes bietet. Die Parallelführung kann beispielsweise durch eine Parallel-Lenkerführung bewirkt werden. Der Massenausgleich ist einfach, da nur rotierende Massen zu berücksichtigen sind.

In einer anderen Ausgestaltung der erfindungsgemäßen Vorrichtung ist vorgesehen, daß die Welle des Kurbelarmes als Hohlwelle ausgebildet ist, durch die eine mit der Welle des Werkzeugträgers verbundene Antriebswelle hindurchgeführt ist, und daß die Hohlwelle und die Antriebswelle in dem Gestell gelagert sind, das mit der Verstelleinrichtung zur allseitigen radialen Einstellung der Exzentrizität und/oder Ausrichtung der Drehachse des Werkzeugträgers zur Drehachse des Kurbelarmes verbunden sind und daß über ein Getriebe zwischen der Antriebswelle und der Hohlwelle Drehzahlverhältnis und Drehrichtung von Werkzeugträgerwelle einerseits und Hohlwelle andererseits je nach der gewünschten Bahnkurve des Werkzeugs vorgebbar sind. Eine derartige Ausgestaltung ergibt einen sehr kompakten Aufbau, der sich insbesondere als Zusatzeinrichtung für Drehbänke eignet, und der hinsichtlich des Massenausgleichs noch besser beherrschbar ist, da alle Teile nur eine Drehbewegung ausführen.

Weitere vorteilhafte Ausgestaltungen sind dadurch gegeben, daß das Getriebe als Rädergetriebe ausgebildet ist, dessen Antriebsrad mit dem Kurbelzapfen fest verbunden ist und wenigstens ein Zwischenrad antreibt, das am Lagerträger gelagert ist, und daß das Zwischenrad mit einem Abtriebsrad in Verbindung steht, daß mit der Welle des Werkzeugträgers fest verbunden ist oder daß die Welle des Kurbelarmes als Hohlwelle ausgebildet ist, durch die eine mit der Welle des Werkzeugträgers verbundene Antriebswelle hindurchgeführt ist, und daß die Hohlwelle und die Antriebswelle in dem Gestell gelagert sind, das mit der Verstelleinrichtung zur allseitigen radialen Einstellung der Exzentrizität und/oder Ausrichtung der Drehachse des Werkzeugträgers zur Drehachse des Kurbelarmes verbunden sind, und daß über ein Getriebe zwischen Antriebswelle und der Hohlwelle Drehzahlverhältnis, Drehrichtung und Phasenlage von Werkzeugträgerwelle einerseits und Hohlwelle andererseits je nach der gewünschten Bahnkurve des Werkzeugs vorgebbar sind.

In weiterer Ausgestaltung der Erfindung sind Maßnahmen vorgesehen, um durch eine Reduzierung der Bauelemente gleichzeitig eine Reduzierung der bewegten Massen zu bewirken, wobei es insbesondere darauf ankommt, die translatorisch bewegten Massen zu eliminieren, um so durch eine Vereinfachung der Auswuchtung höhere Drehzahlen und damit noch höhere Arbeitsgeschwindigkeiten zu erreichen.

Dies wird erfindungsgemäß dadurch gelöst, daß das Antriebsmittel als Rädergetriebe ausgebildet ist, dessen Antriebsrad mit der Kurbelwelle fest verbunden ist und wenigstens ein Zwischenrad antreibt, das an einem Lagerträger gelagert ist und daß das Zwischenrad eine parallel zur ersten Kurbelwelle

5

angeordnete zweite Kurbelwelle antreibt, deren Kurbelarm die gleiche Länge aufweist wie der Kurbelarm der ersten Kurbelwelle und daß mit dem Kurbelzapfen der zweiten Kurbelwelle ein Antriebsrad fest verbunden ist, das mit einem Abtriebsrad in Eingriff steht, das mit der Drehwelle des Werkzeugträgers verbunden ist. Diese Anordnung hat den Vorteil, daß die von der Werkzeugspitze beschriebene Bahnkurve durch die Überlagerung einer Drehbewegung erzeugt werden kann und alle translatorisch bewegten Bauteile, insbesondere eine entsprechende Parallellenkerführung entfallen kann. Eine derartige Bauform ist nicht nur einfacher auszuwuchten, sondern hat auch den Vorteil, daß die Lagerungen überwiegend in einem festen Gestell angeordnet sind, und die Zahl der Drehlager, die auf einer Kreisbahn geführt werden müssen, auf ein einziges Lager reduziert ist, was unmittelbar zu einer Verbesserung der Herstellungsgenauigkeit der zu erzeugenden Polygonkonturen führt.

In einer Ausgestaltung der Erfindung ist vorgesehen, daß das Rädergetriebe und das Antriebsrad an der zweiten Kurbel und das zugehörige Abtriebsrad an der Drehwelle des Werkzeugträgers so ausgelegt sind, daß die erste Kurbelwelle und die Drehwelle gegenläufig und mit vorzugsweise gleicher Drehzahl umlaufen. Die Werkzeugspitze beschreibt hierbei eine Hypozykloide. Bei entsprechenden Vorgaben der Parameter entsteht bei gleicher Drehzahl eine Hypozykloide in Form einer Ellipse.

In einer anderen Ausgestaltung der Erfindung ist vorgesehen, daß das Rädergetriebe und das Antriebsrad an der zweiten Kurbel sowie das Abtriebsrad an der Drehwelle des Werkzeugträgers so ausgelegt sind, daß die erste Kurbelwelle gegenüber der Drehwelle gleichsinnig und mit doppelter Drehzahl umläuft. Bei dieser Anordnung entsteht als Bahnkurve der Werkzeugspitze eine Pascalsche Kurve. Bei der vorgegebenen Zuordnung von Werkzeugbahn und Werkstück, bei der die Werkzeugbahn (Epi- oder Hypozykloide) die Drehachse des Werkstücks umschließt, entspricht die Drehzahldifferenz zwischen Werkstückdrehzahl und Werkzeugdrehzahl der Eckenzahl des Polygons entsprechend den auf Seite 5 angegebenen Formeln mit den zugehörigen Erläuterungen.

Die Erfindung wird anhand schematischer Zeichnungen näher erläutert. Es zeigt :

Figur 1   die Lage von Umkreis und Inkreis einer zu erzeugenden Polygonkontur sowie Lage der Werkzeugbahn hierzu entsprechend den Verfahren nach dem Stande der Technik,

Figur 2   die Lage von Umkreis und Inkreis einer zu erzeugenden Polygonkontur sowie Lage der Werkzeugbahn hierzu gemäß dem erfindungsgemäßen Verfahren,

Figur 3   eine Vorrichtung zur Durchführung des Verfahrens,

Figur 4   eine andere Ausführungsform für eine Vorrichtung, bei der das Werkzeug eine Epizykloidenbahn durchläuft,

Figur 5   eine Ausführungsform entsprechend Fig. 4 zur Herstellung von langen Profilstangen,

Figur 6   eine Ausführungsform für eine Vorrichtung, bei der das Werkzeug eine Hypozykloidenbahn durchläuft,

Figur 7 und 8   Ausführungsformen in Kompaktbauweise jeweils für Epizykloiden- bzw. Hypozykloidenbahnen des Werkzeugs,

Figur 9, 10, 11   « dreikantige » Polygonprofile bei unterschiedlicher Vorgabe der Einstellparameter.

Figur 12   eine Ausführungsform mit einer Hypozykloide als Bahnkurve des Werkzeugs,

Figur 13   eine Ausführungsform mit einer Epizykloide als Bahnkurve des Werkzeugs.

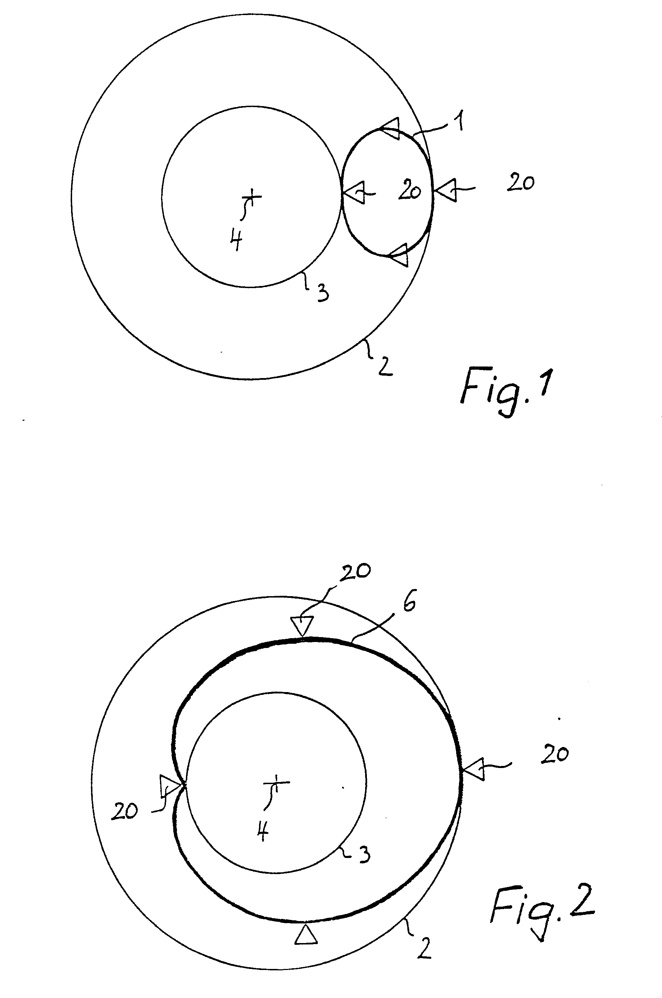

In Fig. 1 ist schematisch die Zuordnung der Werkzeugbahn 1 zum Umkreis 2 und zum Inkreis 3 eines zu erzeugenden Polygonprofils gemäß den Verfahren des Standes der Technik dargestellt. Die Form der zu erzeugenden Polygonkontur ist in diesem Zusammenhang ohne Bedeutung, da hier nur die Lage der Werkzeugbahn zu erläutern ist. Bei den bekannten Verfahren ist dies eine Ellipse. Diese Ellipsenbahn berührt den Umkreis und den Inkreis und setzt voraus, daß das Werkzeug 20, hier symbolisch durch eine Spitze dargestellt, translatorisch geführt wird, damit die Werkzeugschneide während des Umlaufs auf der Werkzeugbahn 1 in etwa gegen die Drehachse 4 des Werkstücks gerichtet bleibt und so, wenn auch mit wechselndem Eingriffswinkel, das Werkzeug mit dem Werkstück im Eingriff ist. Die Werkstückdrehachse 4 ist zugleich die Mittelachse des zu erzeugenden Polygonprofils.

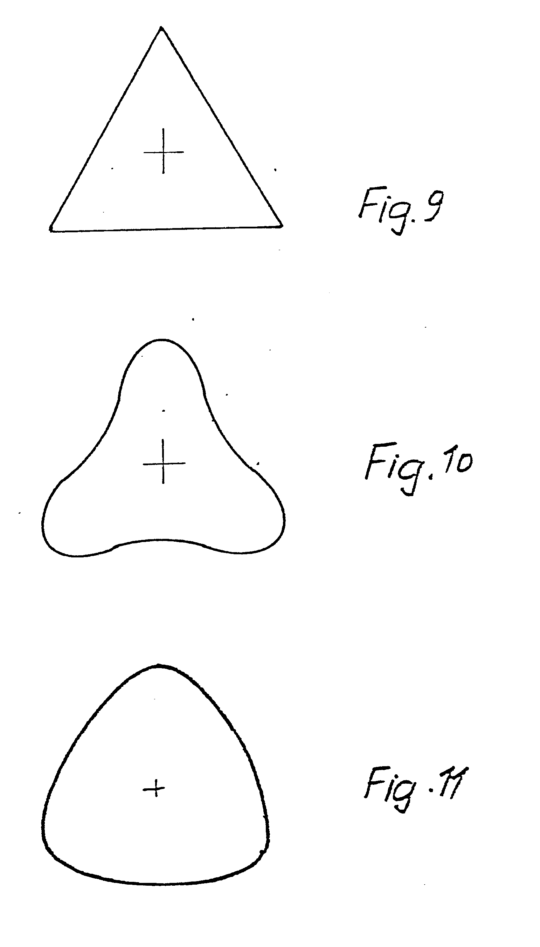

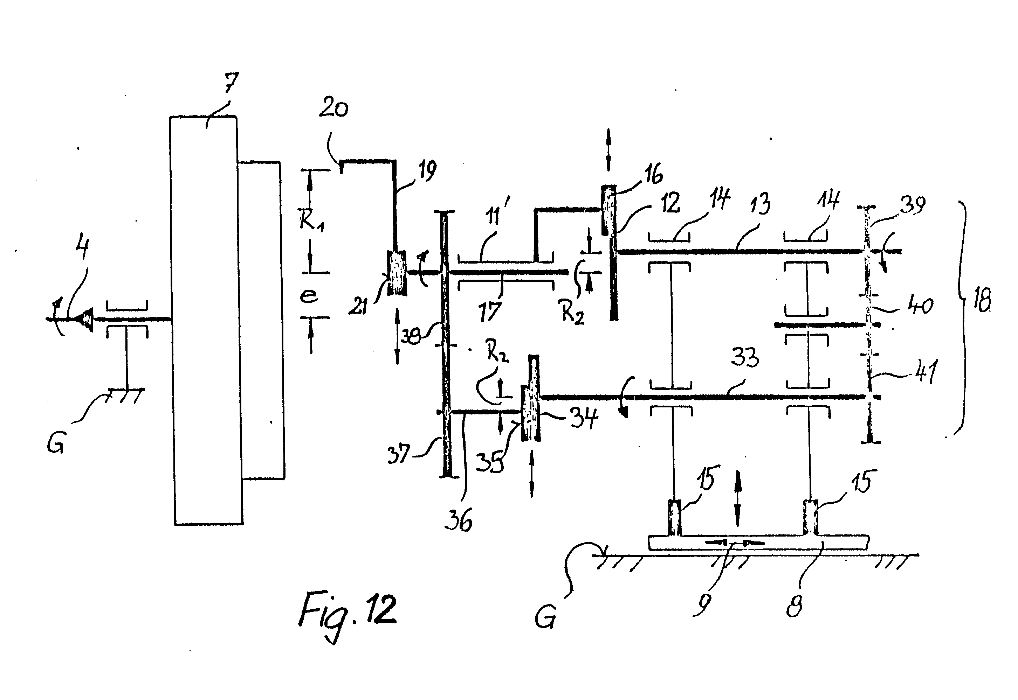

In Fig. 2 ist in gleicher Weise das Verfahren entsprechend der Erfindung dargestellt. Das Verfahren ist so ausgelegt, daß das Werkzeug 20 auf einer Werkzeugbahn 6 umläuft, die den Umkreis 2 tangiert, jedoch den Inkreis 3 einschließlich der Werkstückdrehachse 4 umfaßt und tangiert, so daß sich letztlich eine Werkzeugbahn ergibt, deren « Durchmesser » erheblich größer ist als dies bei den bisherigen Verfahren möglich war. Die Bahnkurve 6 gemäß der Erfindung ist entweder eine Epizykloide, insbesondere eine Pascalsche Kurve, wie dargestellt, oder aber eine Hypozykloide, insbesondere eine Ellipse. Die dargestellte Pascalsche Kurve ist aus Gründen der zeichnerischen Darstellung etwas verzerrt dargestellt. In der Praxis ist die Kurve nicht so stark ausgeprägt. Bei der dargestellten Bahnkurve 6 ergibt sich bei entsprechendem Drehzahlverhältnis zwischen Drehzahl des Werkstücks und Drehzahl des Werkzeugs ein dreieckiges Polygonprofil mit konkaven Flanken wie in Fig. 10 dargestellt. Wird eine entsprechende Vorrichtung so eingestellt, daß die Bahnkurve 6 um 180° gedreht dem Umkreis 2 zugeordnet ist, dann ergibt sich bei entsprechendem Drehzahlverhältnis eine « dreieckige » Polygonkontur mit im wesentlichen scharf ausgezogenen Ecken und geraden Flanken, wie in Fig. 9 dargestellt.

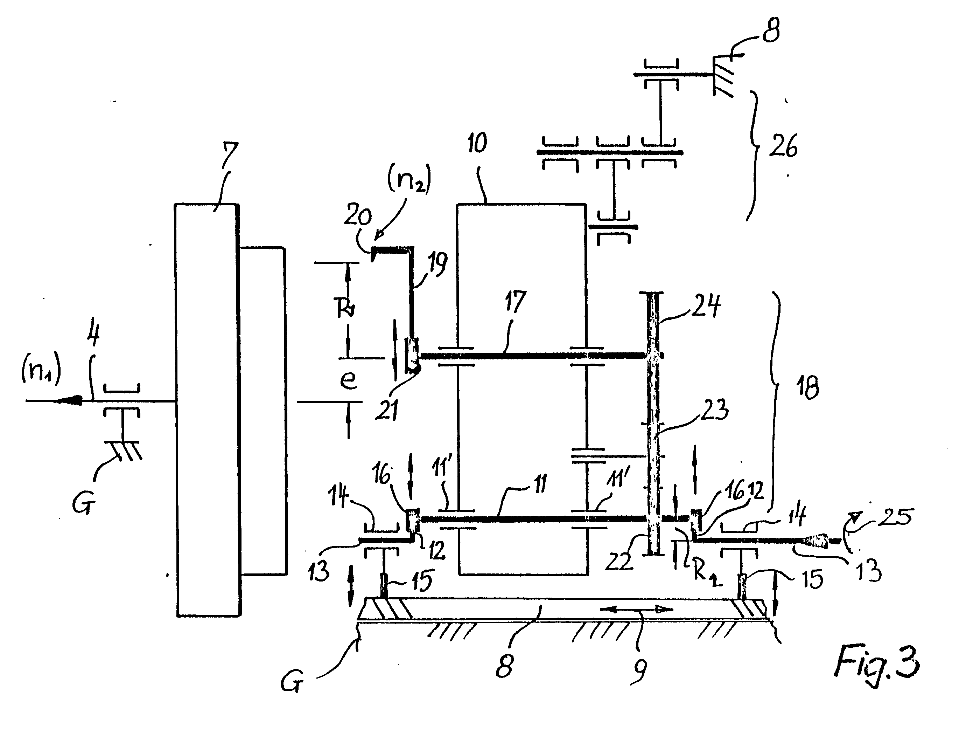

Die Arbeitsweise des erfindungsgemäßen Verfahrens, d. h. die Erzeugung der vom Werkzeug zu durchlaufenden Bahnkurve wird anhand der in Fig. 3 dargestellten Vorrichtung näher erläutert. Die Vorrichtung weist ein Spannfutter 7 für das zu bearbeitende, hier nicht näher dargestellte Werkstück auf, das mit einem Antrieb in Verbindung steht und um die Werkstückdrehachse 4 mit einer vorgebbaren, konstanten Winkelgeschwindigkeit dreht. Dem Spannfutter 7 ist ähnlich wie bei einer Drehbank ein supportähnliches Gestell 8 zugeordnet, das gegenüber dem hier nicht näher dargestellten Maschinengestell G, in dem die Drehachse 4 gelagert ist, in Richtung des Pfeiles 9 gegen das Spannfutter 7 und damit gegen das Werkstück verschiebbar gelagert ist. Auf diesem Gestell 8 ist ein Lager 11' angeordnet, das an einem Ende vom Kurbelzapfen 11 eines im Gestell 8 gelagerten Kurbelarmes 12 gehalten ist, das Teil eines Lagerträgers 10 ist. Die Welle 13 des Kurbelarmes 12 steht mit dem Antrieb des Spannfutters 7 über ein hier nicht näher dargestelltes Getriebe in Verbindung, so daß die Drehzahl der Welle 13 abhängig ist von der Drehzahl des Spannfutters 7. Bei der dargestellten Ausführungsform ist die Kurbelanordnung aus Stabilitätsgründen zweiseitig gelagert. Die Lager 14 der Welle 13 sind mit Verstelleinrichtungen 15 am Gestell 8 gehalten, so daß der Lagerträger 10 insgesamt allseitig radial, insbesondere quer zur Drehachse 4 des Spannfutters 7 verschoben werden kann.

Der Kurbelarm 12 ist ferner mit Verstellmitteln 16 versehen, so daß der Kurbelradius $R_2$ veränderbar ist. Im Lagerträger 10 ist ferner eine Welle 17 gelagert, die über ein Zahnradgetriebe 18 mit dem Kurbelzapfen in Verbindung steht. Funktion und Arbeitsweise dieses Zahnradgetriebes werden nachstehend noch näher erläutert. Auf der dem Zahnradgetriebe 18 abgekehrten Seite ist die Welle 17 mit einem Werkzeugträger 19 versehen, an dessen freien Ende ein Werkzeug 20 befestigt ist. Mit Hilfe einer Verstelleinrichtung 21 kann der Abstand des Werkzeuges von der Drehachse der Welle 17 und damit der Radius $R_1$ der Kreisbahn verändert werden, die das Werkzeug in bezug auf die Welle 17 beschreibt.

Das dargestellte Getriebe 18 ist so ausgelegt, daß ein Zahnrad 22 fest auf dem Kurbelzapfen 11 angeordnet ist und daß diesem Zahnrad 22 ein Zahnrad 23 zugeordnet und im Lagerträger 10 frei drehbar gelagert ist. Das Zahnrad 23 steht in Verbindung mit einem Zahnrad 24, das an der Welle 17 befestigt ist, so daß die Welle 17 bei Drehung der Kurbelwelle 13 in Richtung des Pfeiles 25 die gleiche Drehrichtung erhält. Die Zahnräder 22 und 24 sind jedoch so ausgelegt, daß die Welle 17 gegenüber der Kurbelwelle 13 mit geringerer Drehzahl umläuft. Das der Kurbelwelle 13 abgekehrte Ende des Lagerträgers 10 ist mittels einer Parallel-Lenkerführung 26 am Gestell 8 gehalten, die hier nur schematisch dargestellt ist. Wird nun die Kurbelwelle 13 in Richtung des Pfeiles 25 angetrieben, so beschreibt jeder Punkt des Lagerträgers 10, also auch die Welle 17 eine Kreisbahn mit dem Radius $R_2$. Da gleichzeitig über das Getriebe 18 auch die Welle 17 angetrieben wird, beschreibt das Werkzeug 20 in bezug auf die Welle 17 eine Kreisbahn mit dem Radius $R_1$. Die Überlagerung dieser beiden Kreisbewegungen ergibt in bezug auf den Raum, d. h. in bezug auf das Spannfutter 7 bei der dargestellten und beschriebenen Getriebeanordnung eine Epizykloide, im vorliegenden Fall eine Pascalsche Kurve. Bei entsprechender Abstimmung der Werkstückdrehzahl $n_1$ und der Drehzahl des Werkzeugs $n_2$, wie sie sich aus der Überlagerung der beiden Kreisbahnen ergibt, bildet die Überlagerung der Drehbewegung des Werkstücks im Spannfutter 7 einerseits und des Werkzeugs 20 andererseits eine Polygonkontur mit entsprechender Eckenzahl, wie sie sich nach den vorstehend auf Seite 5 angegebenen Formeln vorgeben läßt. Der Flankenverlauf zwischen den Ecken, d. h. gerade Flanken mit scharf ausgezogenen Ecken, konkave Flanken mit abgerundeten Ecken bzw. konvexe Flanken mit abgerundeten Ecken ergibt sich aus einer Einstellung der übrigen Parameter, was nachstehend noch näher beschrieben werden wird.

Wenn man statt einer Epizykloide, d. h. einer Pascalschen Kurve als Bahnkurve für das Werkzeug 20 eine Hypozykloide, beispielsweise eine Ellipse vorgibt, so kann durch eine verhältnismäßig einfache Änderung des Getriebes 18 dies mit der vorstehend beschriebenen Vorrichtung erreicht werden. Hierzu ist es lediglich erforderlich, das Zahnrad 23 vollständig zu eliminieren und die Zahnräder 22 und 24 mit gleicher Zähnezahl, d. h. gleichem Durchmesser zu versehen. In diesem Fall dreht die Welle 17 gegenläufig zur Kurbelwelle 13, jedoch mit gleicher Drehzahl. Das Werkzeug 20 beschreibt dann im Raum eine Ellipse, die wiederum in Überlagerung mit der konstanten Drehbewegung des im Spannfutter 7 gehaltenen Werkstücks bei entsprechender Vorgabe der übrigen Parameter eine Polygonkontur ergibt. Die gewählte Form des Lagerträgers erlaubt es hierbei, das Getriebe 18 in einer im Werkzeugmaschinenbau üblichen Form als Wechselrädergetriebe auszugestalten. Da diese Technik dem Fachmann bekannt ist, braucht sie hier nicht näher dargestellt und erläutert zu werden.

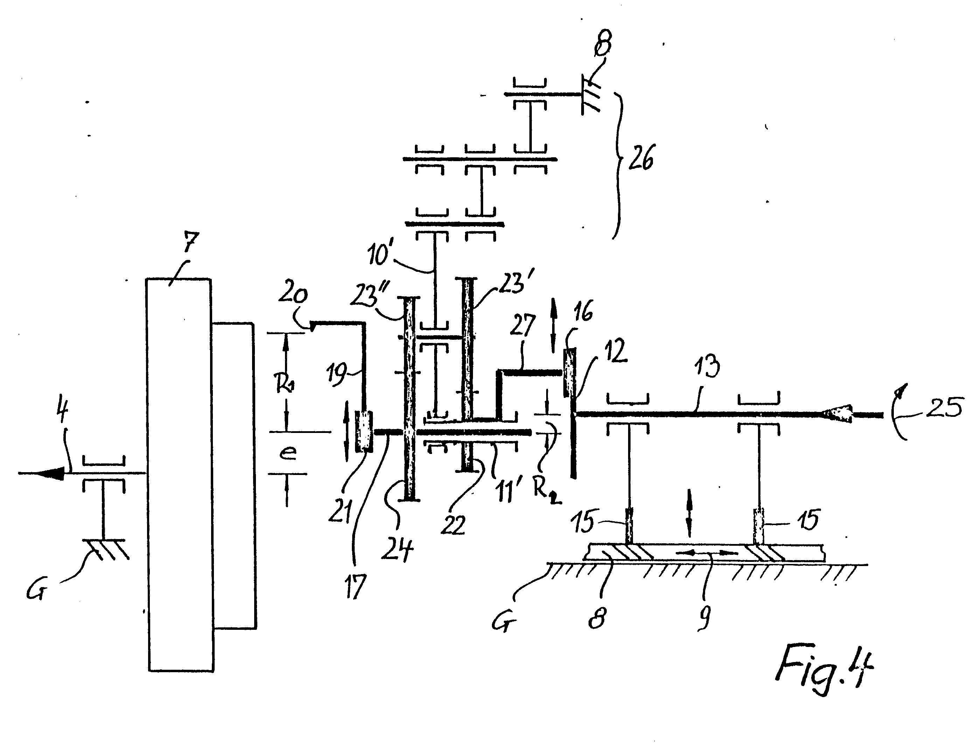

Fig. 4 zeigt eine andere Ausführungsform für eine Vorrichtung, die gegenüber der Ausführungsform gemäß Fig. 3 einen wesentlich kompakteren Aufbau erlaubt. Soweit in Aufbau und Funktion mit der Ausführungsform gemäß Fig. 3 entsprechende Teile vorhanden sind, sind diese mit den gleichen Bezugszeichen wie in Fig. 3 versehen. Auch bei dieser Vorrichtung ist auf einem nicht näher dargestellten Maschinengestell G ein Spannfutter 7 dreh- und antreibbar gelagert. Auf diesem Maschinengestell G ist nach Art eines Supportes ein Gestell 8 vorgesehen, in dem eine Kurbelwelle 13 gelagert ist, an deren Kurbelarm 12 über eine Verstelleinrichtung 16 ein Lager 11' gehalten ist. Das Lager 11' bildet hier zugleich den Kurbelzapfen, der über ein Verbindungselement 27 und eine entsprechende Verstelleinrichtung 16 wiederum radial einstellbar ist. Entsprechend der Vorgabe der Verstelleinrichtung läßt sich auch hier wieder der Kurbelradius $R_2$ einstellen.

Auf dem im wesentlichen als Lager 11' ausgebildeten Kurbelzapfen ist wiederum ein Zahnrad 22 befestigt, dem ein Zahnrad 23' und 23'' zugeordnet ist, das ebenfalls in einem Lagerträger 10' gelagert ist, wobei das Zahnrad 23'' mit einem Zahnrad 24 in Verbindung steht, das auf einer Welle 17 befestigt ist, die in dem den Kurbelzapfen 11 bildenden Lager 11' drehbar gelagert ist. Ein Ende des Lagerträgers 10' ist wiederum über eine Parallelführungseinrichtung 26 am supportartigen Gestell 8 gehalten, so daß sich für den Lagerträger 10' in bezug auf die durch die Kurbel 12 erzwungene Bewegung eine translatorische Kreisbewegung ergibt.

Bei einer Drehung der Kurbelwelle 13 in Richtung des Pfeiles 25 läuft die Welle 17 mit geringerer Geschwindigkeit jedoch gleicher Drehrichtung zur Kurbelwelle 13 um, so daß das am Werkzeugträger 19 befestigte Werkzeug 20 wiederum in bezug auf die Welle 17 eine Kreisbahn mit dem Radius $R_1$ und durch die Überlagerung der beiden Kreisbewegungen im Raum wieder eine Epizykloide, hier eine Pascalsche Kurve beschreibt.

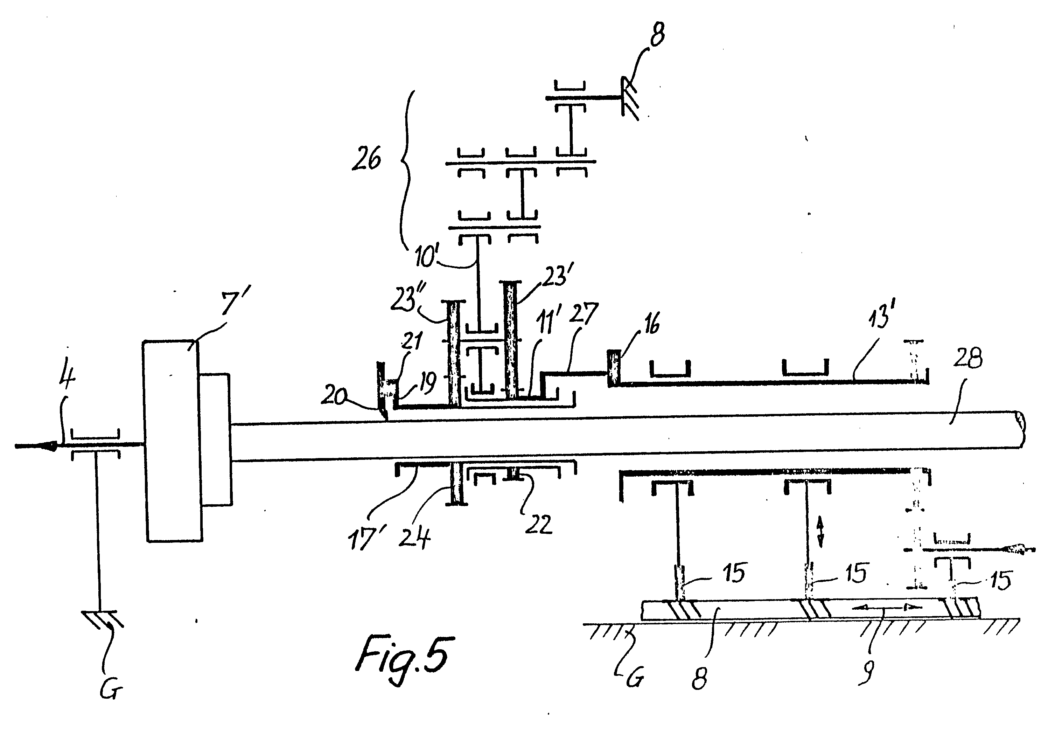

Durch das Verstellmittel 16 und die Verstelleinrichtung 21 lassen sich wiederum der Radius $R_2$ und der Radius $R_1$ einstellen, während durch die Verstelleinrichtung 15 die Exzentrizität zwischen der Werkstückdrehachse 4 und der Kurbelwelle 13 vorgebbar ist. Bei den Ausführungsformen gemäß Fig. 3 und 4 ist es infolge der Verschiebbarkeit des supportartigen Gestelles 8 in Pfeilrichtung 9 möglich, zylindrische Körper mit Polygonquerschnitt in beschränkter Länge zu erzeugen. Die Ausführungsform gemäß Fig. 4 erlaubt jedoch eine konstruktive Abwandlung, die es auch ermöglicht, Stangenmaterial zu verarbeiten und damit auch Profilstäbe mit Polygonquerschnitt zu erzeugen. Da der Grundaufbau der Ausführungsform gemäß Fig. 4 entspricht, sind hier gleiche Bauteile mit gleichen Bezugszeichen versehen. Der wesentliche Unterschied der Ausführungsform gemäß Fig. 5 gegenüber Fig. 4 besteht darin, daß die Kurbelwelle 13' einerseits und die Werkzeugträgerwelle 17' andererseits als Hohlwelle ausgebildet sind, so daß das zu bearbeitende Stangenmaterial 28 durch die Vorrichtung und durch das entsprechend ausgebildete Spannfutter 7' fortlaufend hindurchgeführt werden kann.

An die als Hohlwelle ausgebildete Kurbelwelle 13' schließt sich wieder ein Verbindungsstück 27 an, das den als Lager 11' ausgebildeten Kurbelzapfen trägt, der seinerseits wiederum in einem Lagerträger 10' mit Parallel-Lenkerführung 26 gelagert ist. Mit dem Lager 11' ist wiederum ein Zahnrad 22 sowie entsprechende Zahnräder 23', 23" verbunden, wobei das Zahnrad 23" mit einem Zahnrad 24 zusammenwrkt, das auf der als Hohlwelle ausgebildeten Werkzeugträgerwelle 17' befestigt ist. Die Hohlwelle 17' weist wieder einen Werkzeugträger 19 sowie eine Verstelleinrichtung 21 für das Werkzeug 20 auf. Die als Hohlwelle ausgebildete Kurbelwelle 13' ist wiederum in einem supportartigen Gestell 8 über Verstelleinrichtungen 15 gelagert, das wiederum auf dem Maschinengestell G in Richtung des Pfeiles 9 verschiebbar gelagert ist.

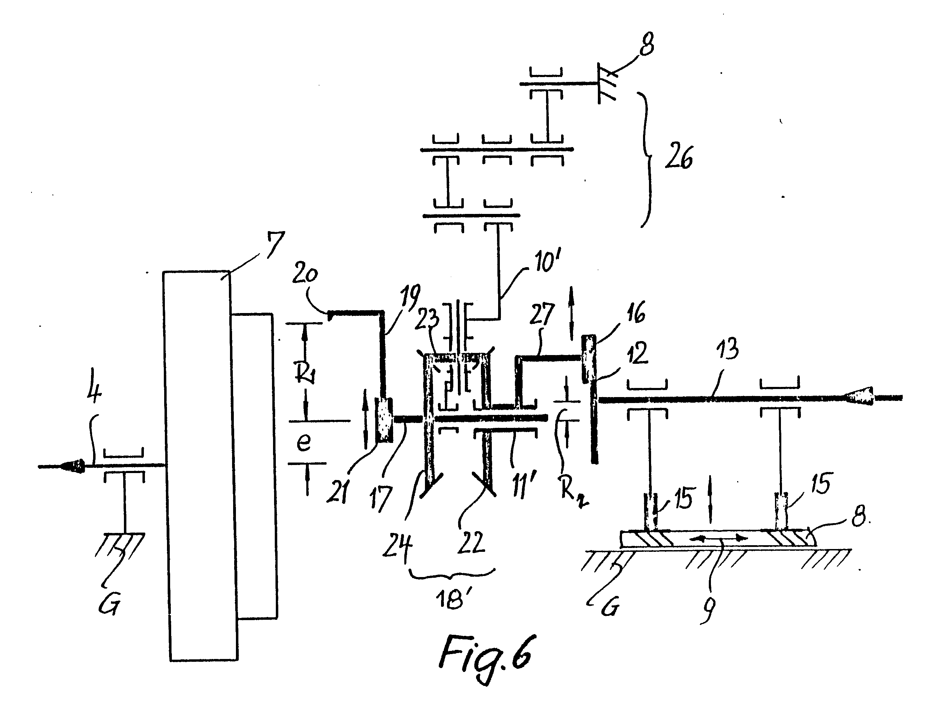

Fig. 6 zeigt eine Abwandlung der Ausführungsform gemäß Fig. 4 mit einem Getriebe 18' zur Erzeugung von Werkzeugbahnkurven, die Hypozykloiden entsprechen. Da der grundlegende Aufbau der Vorrichtung gemäß Fig. 6 der anhand von Fig. 4 beschriebenen Vorrichtung entspricht, sind hier für die gleichen Bauelemente die gleichen Bezugszeichen verwendet worden, so daß auf die Beschreibung zu Fig. 4 verwiesen werden kann. Der Unterschied besteht lediglich in der Ausbildung des Getriebes 18', das hier als Kegelradgetriebe ausgebildet ist, wobei über das im Lagerträger 10' gelagerte Zwischenrad 23 dem auf der Welle 17 angeordneten Zahnrad 24 eine zum Zahnrad 22 gegenläufige Drehrichtung jedoch mit gleicher Winkelgeschwindigkeit erteilt wird. Durch die Überlagerung der beiden Drehkreise mit dem Radius $R_2$ und dem Radius $R_1$ jeweils in bezug auf die Kurbelwelle 13 bzw. die Welle 17, ergibt sich im Raum für das Werkzeug 20 eine Bahnkurve, die einer Ellipse entspricht.

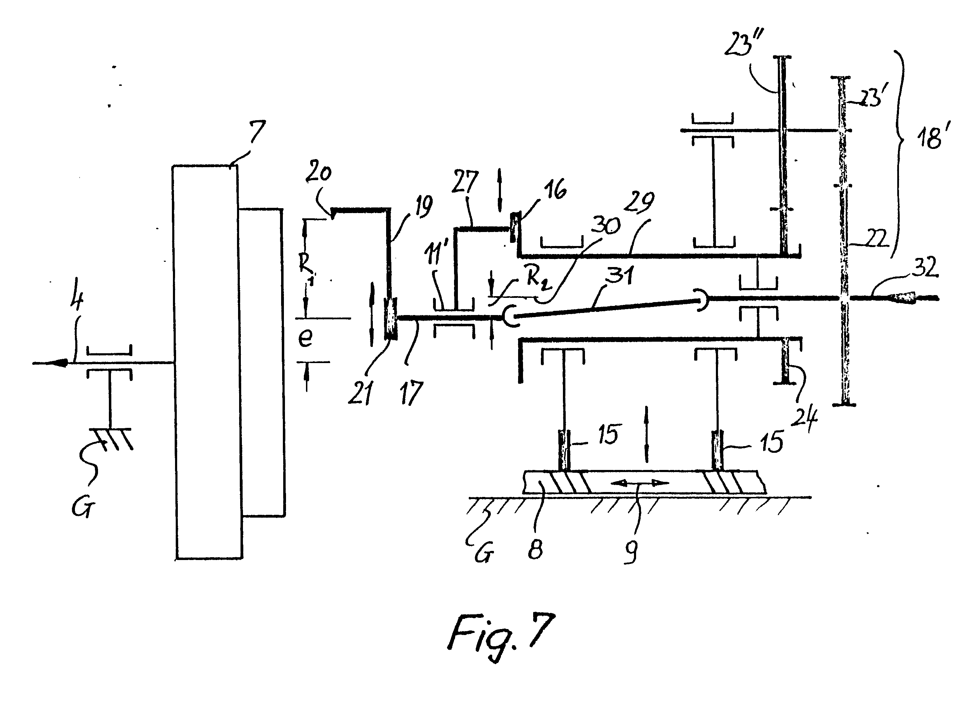

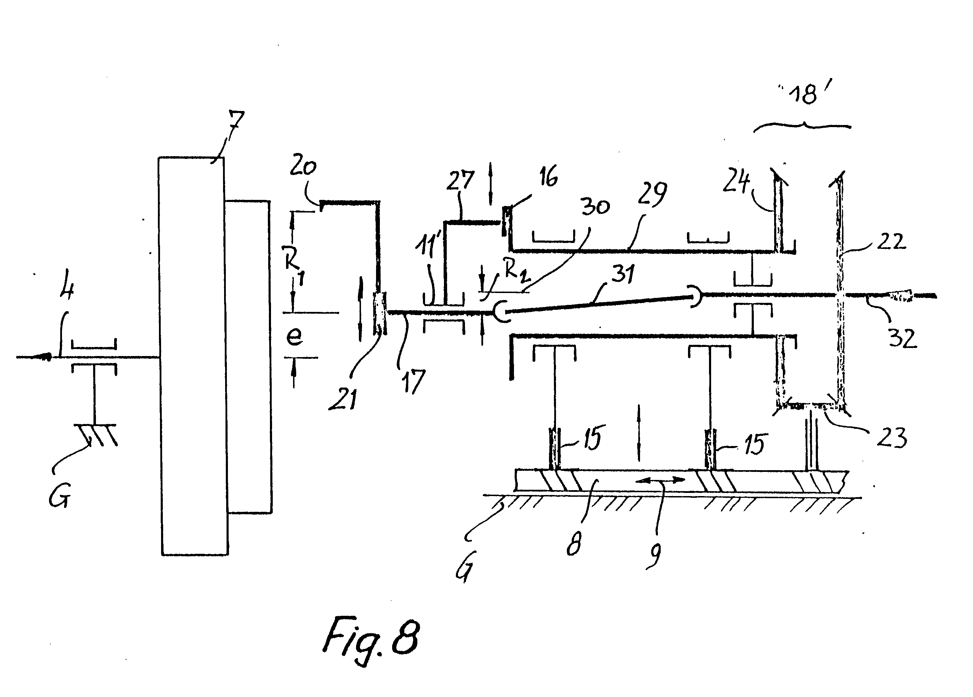

In Fig. 7 und 8 ist eine weitere Ausführungsform für eine Vorrichtung dargestellt, wobei die Vorrichtung gemäß Fig. 7 zur Erzeugung von Werkzeugbahnen ausgelegt ist, die Pascalsche Kurven sind, während die Ausführungsform gemäß Fig. 8 so ausgelegt ist, daß hiermit Werkzeugbahnen entstehen, die Hypozykloiden, insbesondere Ellipsen entsprechen. Bei der Ausführungsform gemäß Fig. 7 ist wiederum in einem supportartigen Gestell 8, das mit Verstelleinrichtungen 15 versehen ist, eine Hohlwelle 29 gelagert, die an ihrem dem Spannfutter 7 zugekehrten Ende mit einem « Kurbelzapfen » 11' versehen ist, der über ein Verbindungselement 27 mit der Hohlwelle 29 verbunden ist. Der « Kurbelradius » $R_2$, den der « Kurbelzapfen » 11' um die Mittelachse 30 der Hohlwelle 29 beschreibt, ist wiederum mit Hilfe eines Verstellmittels 16 zwischen Verbindungselement 27 und Hohlwelle 29 einstellbar. Im Kurbelzapfen 11' ist eine Welle 17 gelagert, an der über eine Verstelleinrichtung 21 ein Werkzeugträger 19 mit einem Werkzeug 20 gehalten ist. Die Welle 17 steht über eine Gelenkwelle 31 mit einer Antriebswelle 32 in Verbindung.

Es ist ein Zahnradgetriebe 18' vorgesehen, das mit seinen Zahnrädern 22, 23', 23" und 24 die Hohlwelle 29 antreibt, wobei die Hohlwelle 29 hierbei mit gleicher Drehrichtung aber höherer Drehgeschwindigkeit wie die Antriebswelle 32 umläuft. Auch bei dieser Getriebeanordnung beschreibt die Welle 17 einen Kreis mit dem Radius $R_2$ und das Werkzeug 20 in bezug auf die Welle 17 einen Kreis mit dem Radius $R_1$, so daß in der Überlagerung dieser beiden Kreisbewegungen das Werkzeug im Raum eine Pascalsche Kurve beschreibt.

Die Ausführungsform gemäß Fig. 8 entspricht in Ihrem Aufbau der Ausführungsform gemäß Fig. 7. Die Abweichung besteht lediglich in der Auslegung des Getriebes 18', das hier als Kegelradgetriebe ausgebildet ist, wobei das Antriebszahnrad 22 und das Abtriebszahnrad 24 gleichen Durchmesser aufweisen, so daß bei einem Antrieb über die Welle 32 durch das Zwischenrad 23 die Hohlwelle die gleiche Drehgeschwindigkeit jedoch eine gegenläufige Drehrichtung zur Antriebswelle 32 aufweist. Die übrigen Bauteile entsprechen der Ausführungsform gemäß Fig. 7, so daß sich eine weitere Beschreibung erübrigt. Mit den vorbeschriebenen Vorrichtungen lassen sich nun eine Vielzahl von Polygonkonturen erzeugen, wobei durch die freie Einstellbarkeit der einzelnen Parameter, z. B. der Kreisradien $R_1$ und $R_2$ sowie durch die Verschiebung der Gesamtanordnung gegenüber der Drehachse 4 des Werkstücks und der Drehzahlabstimmung vielfältige Variationen möglich sind. Eine Verstellmöglichkeit wird anhand

# 0 135 709

eines « dreieckigen » Polygonquerschnitts näher erläutert.

Zur Erzeugung des in Fig. 9 dargestellten Polygons mit näherungsweise geraden Seiten und scharf ausgezogenen Ecken wird als Bahnkurve für das Werkzeug eine Pascalsche Kurve gewählt, so daß hierzu eine der Vorrichtungen gem. Fig. 3, 4, 5 und 7 eingesetzt werden kann. Das Drehzahlverhältnis zwischen der Werkstückdrehzahl $n_1$ und der Werkzeugdrehzahl $n_2$ wird entsprechend der auf Seite 5 angegebenen Formel bei $n_1 < n_2$ so eingestellt, daß sich die Eckenzahl $E = 3$ ergibt. Bei einem Radius des Umkreises von 120 mm muß der Radius $R_1$ der ersten Kreisbahn, d. h. der Werkzeugkreisbahn auf 90 mm eingestellt werden. Der radiale Abstand zwischen der Drehachse 4 des Spannfutters 7 und der Drehachse 13 der zweiten Kreisbahn wird auf 33 mm und der Radius $R_2$ der zweiten Kreisbahn, d. h. der Abstand des Kurbelzapfens 11 zur Kurbelwelle 13 wird auf 3 mm eingestellt. Bei einer derartigen Einstellung läßt sich mit den vorstehend angegebenen Vorrichtungen eine Polygonkontur entsprechend Fig. 9 erzeugen. Der polnahe Scheitelpunkt der Pascalschen Kurve tangiert hierbei den Umkreis. Wird bei sonst gleichbleibender Einstellung der radiale Abstand zwischen der Drehachse 4 des Spannfutters 7 und der Drehachse 13 der zweiten Kreisbahn vergrößert und der Radius $R_1$ verkleinert, dann entsteht eine « dreieckige » Polygonkontur mit eingezogenen, konkaven Seiten, aber noch mit scharfen Ecken.

Wird der radiale Abstand gegenüber der vorstehend angegebenen Einstellung verkleinert und der Radius $R_1$ vergrößert, dann entstehen « dreieckige » Polygonkonturen mit konvexen Seiten, wie dies in Fig. 11 dargestellt ist.

Die in Fig. 12 dargestellte Vorrichtung weist ein Spannfutter 7 für das zu bearbeitende, hier nicht näher dargestellte Werkstück auf, das mit einem Antrieb in Verbindung steht und um die Werkstückdrehachse 4 mit einer vorgebbaren, konstanten Winkelgeschwindigkeit dreht. Dem Spannfutter 7 ist ähnlich wie bei einer Drehbank ein supportähnliches Gestell 8 zugeordnet, das gegenüber dem hier nicht näher dargestellten Maschinengestellt G, in dem die Drehachse 4 gelagert ist, in Richtung des Pfeiles 9 gegen das Spannfutter 7 und damit gegen das Werkstück verschiebbar gelagert ist. Auf diesem Gestell 8 ist ein Lager 14 angeordnet, das eine Welle 13 trägt, die mit einem Kurbelarm 12 verbunden ist. Die Welle 13 des Kurbelarms 12 steht mit dem Antrieb des Spannfutters 7 über ein hier nicht näher dargestelltes Getriebe in Verbindung, so daß die Drehzahl der Welle 13 abhängig ist von der Drehzahl des Spannfutters 7. Bei der Ausführungsform gemäß Fig. 12 ist das Getriebe so ausgelegt, daß die Welle 13 gegenläufig zum Spannfutter 7 des Werkstücks umläuft. Die Lager 14 der Welle 13 sind mit Verstelleinrichtungen 15 am Gestell 8 gehalten, so daß die ganze Anordnung insgesamt allseitig radial, insbesondere quer zur Drehachse 4 des Spannfutters 7 verschoben werden kann.

Der Kurbelarm 12 ist ferner mit Verstellmitteln 16 versehen, so daß der als Lagerhülse 11' ausgebildete Kurbelzapfen hinsichtlich des Kurbelradius $R_2$ veränderbar ist. Im Drehlager 11' ist eine Welle 17 gelagert, deren freies Ende mit einem Werkzeugträger 19 versehen ist, an dem das Werkzeug 20 befestigt ist. Mit Hilfe einer Verstelleinrichtung 21 kann der Abstand des Werkzeugs 20 von der Drehachse der Welle 17 und damit der Radius $R_1$ der Kreisbahn verändert werden, die das Werkzeug 20 in bezug auf die Welle 17 beschreibt.

Um nun die Welle 17 des Werkzeugträgers 19 hinsichtlich Drehrichtung, Winkelgeschwindigkeit und Phasenlage in Abhängigkeit von Kurbelarm 12 antreiben zu können, ist im Gestell 8 eine zweite Kurbelwelle 33 gelagert, deren Kurbelarm 34 wiederum mit einer Verstelleinrichtung 35 versehen ist, die es ermöglicht, den Kurbelradius entsprechend einzustellen. Der Kurbelzapfen 36 am Kurbelarm 34 ist mit einem Antriebsrad 37 fest verbunden, das mit einem Abtriebsrad 38 im Eingriff steht, das mit der Welle 17 des Werkzeugträgers 19 verbunden ist. Die erste Kurbelwelle 13 und die zweite Kurbelwelle 33 stehen über ein Rädergetriebe 18 miteinander in Verbindung, das ein mit der Kurbelwelle 13 verbundenes Antriebsrad 39, ein erstes Zwischenrad 40 sowie ein zweites Zwischenrad 41 aufweist, wobei die Anordnung so getroffen ist, daß die Kurbelwelle 13 und die Kurbelwelle 33 gleichsinnig mit gleicher Drehgeschwindigkeit umläuft.

Bildet man nun das Antriebsrad 37 und das Abtriebsrad 38 gleich groß aus und stellt die Kurbel 36 so ein, daß sie den gleichen Kurbelradius besitzt wie die Kurbel 12, nämlich $R_2$, so beschreibt das Werkzeug 20 eine Hypozykloide, hier in Form einer Ellipse. Durch die Überlagerung mit der konstanten Drehbewegung des im Spannfutter 7 gehaltenen Werkstücks ergibt sich bei entsprechender Vorgabe der übrigen Parameter eine entsprechende Polygonkontur.

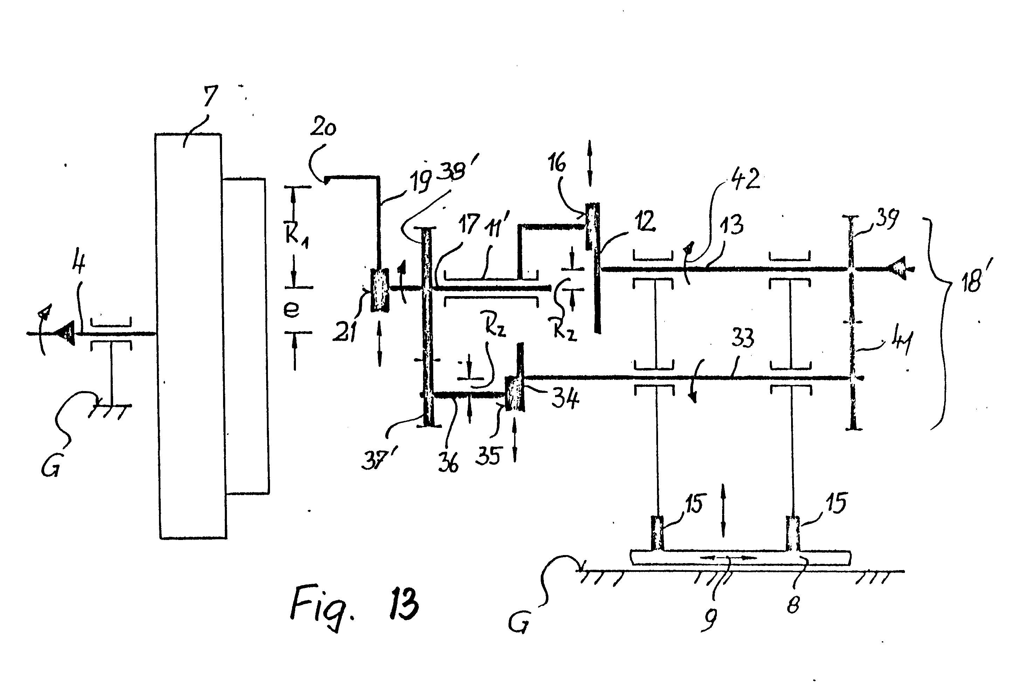

Die Ausführungsform gemäß Fig. 13 entspricht in ihrem Aufbau im wesentlichen der Ausführungsform gemäß Fig. 12, so daß hier gleiche Bauteile mit gleichen Bezugszeichen versehen sind. Der bauliche Unterschied besteht darin, daß das Rädergetriebe 18 nur durch das Antriebsrad 39 und ein Zwischenrad 41 an der Kurbelwelle 33 gebildet wird, so daß die erste Kurbelwelle 13 und die zweite Kurbelwelle 33 gegenläufig aber mit gleicher Drehzahl umlaufen.

Das am Kurbelzapfen 36 der zweiten Kurbelwelle 33 angeordnete Antriebsrad 37' ist halb so groß wie das mit der Welle 17 verbundene Abtriebsrad 38'. Auch hier sind über die Verstellvorrichtungen beide Kurbelzapfen so eingestellt, daß sie den gleichen Kurbelradius $R_2$ beschreiben.

Wird nun die Kurbelwelle 13 in Richtung des Pfeiles 42 angetrieben, so beschreibt die Welle 17 eine Kreisbahn mit dem Radius $R_2$. Da gleichzeitig über das Getriebe 18 auch die Welle 17 angetrieben wird, beschreibt das Werkzeug 20 in bezug auf die Welle 17 eine Kreisbahn mit dem Radius $R_1$. Die Überlagerung dieser beiden Kreisbewegungen ergibt in bezug auf den Raum, d. h. in bezug auf das Spannfutter 7 bei der dargestellten und beschriebenen Getriebeanordnung eine Epizykloide, im

**0 135 709**

vorliegenden Falle eine Pascalsche Kurve. Bei entsprechender Abstimmung der Werkstückdrehzahl $n_1$ und der Drehzahl des Werkzeugs $n_2$, wie sie sich aus der Überlagerung der beiden Kreisbahnen ergibt, bildet die Überlagerung der Drehbewegung des Werkstücks im Spannfutter 7 einerseits und des Werkzeugs 20 andererseits eine Polygonkontur mit entsprechender Eckenzahl, wie sie sich nach den auf Seite 5 angegebenen Formeln vorgeben läßt. Der Flankenverlauf zwischen den Ecken, d. h. gerade Flanken mit scharf ausgezogenen Ecken, konkave Flanken mit abgerundeten Ecken bzw. konvexe Flanken mit abgerundeten Ecken ergibt sich aus einer entsprechenden Einstellung der übrigen Parameter.

Mit den beiden vorbeschriebenen Vorrichtungen lassen sich nun eine Vielzahl von Polygonkonturen erzeugen, wobei durch die freie Einstellbarkeit der einzelnen Parameter, beispielsweise der Kreisradius $R_1$ und $R_2$, sowie durch Verschiebung der Gesamtanordnung mit Hilfe der Feststellvorrichtung 15 in bezug auf die Drehachse 4, d. h. die Einstellung der Exzentrizität e zwischen der Drehachse 4 und der Drehachse der Welle 17, sowie der Drehzahlabstimmung vielfältige Variationen möglich sind. Durch Variationen der verschiedenen Parameter zueinander, wie beispielsweise Änderungen des Verhältnisses des Radius $R_1$ der Werkzeugkreisbahn und des Radius $R_2$ der Kreisbahn, auf der die Drehachse der Werkzeugkreisbahn umläuft oder die Phasenlage der beiden Kurbelarme zueinander oder durch entsprechende Wahl des Übersetzungsverhältnisses zwischen der Drehzahl des Spannfutters einerseits und der Drehzahl des Werkzeugs auf seiner ersten Kreisbahn bzw. der Drehzahl des Werkzeugs auf seiner zweiten Kreisbahn andererseits, kann fast jede beliebige Polygonkontur erzeugt werden.

Verfahren und Anordnung sind nicht nur zur spanabhebenden Bearbeitung von Werkstücken, beispielsweise in Form eines Drehvorganges geeignet, sondern es ist z. B. auch eine spanabhebende Bearbeitung durch Schleifen oder Fräsen möglich, wenn anstelle eines Drehmeißels als Werkzeug ein zusätzlich rotierender Schleif-/Fräskörper auf dem Werkzeugträger angeordnet ist. Der besondere Vorteil der erfindungsgemäßen Vorrichtungen besteht vor allem darin, daß die Einzelbewegungen innerhalb des Systems durch Kreisbahnen gebildet werden, so daß auch größere Massen, wie sie beispielsweise bei der Schleifbearbeitung durch den Schleifkörper mit Schleifspindel und Schleifantrieb gegeben sind, ohne Schwierigkeiten ausgewuchtet werden können. Anstelle der Bearbeitung durch Drehen und Schleifen können beispielsweise vorbearbeitete Werkstücke mit Polygonkonturen anschließend auch mit einem Rollierwerkzeug bearbeitet werden oder z. B. eine Oberflächenbearbeitung bzw. Härtung durch Laser- oder Elektronenstrahlen, Flammspritzen oder ähnliches vorgenommen werden.

Die Vorrichtung kann außer zur Durchführung des erfindungsgemäßen Verfahrens, d. h. mit einer die Drehachse des Werkstücks umschließenden Bahnkurve des Werkzeugs, auch in konventioneller Form eingesetzt werden, mit seitlich die Werkstückkontur tangierender Bahnkurve für das Werkzeug. Auch bei dieser Anwendungsweise lassen sich polygonale Querschnitte in vielfältiger Art herstellen bzw. bearbeiten, so insbesondere durch ein Schlagdrehfräsen mit diskontinuierlichem Werkzeugeingriff.

Anstelle der als bevorzugte Ausführungsform dargestellten Vorrichtungen lassen sich auch andere Getriebeanordnungen, insbesondere Umlaufrädergetriebe, hydraulische, elektrische oder pneumatische Anordnungen einsetzen, mit deren Hilfe sich Epizykloiden oder Hypozykloiden, insbesondere Pascalsche Kurven und Ellipsen darstellen lassen, wobei in erfindungsgemäßer Weise Kreisbewegungen überlagert werden.

Das Verfahren kann auch zur Erzeugung von Polygonkonturen höherer Ordnung verwendet werden, wenn beispielsweise den vorstehend dargestellten und beschriebenen Vorrichtungen ein Getriebe vorgeschaltet wird, das einen ungleichförmigen Abtrieb aufweist, d. h. die Kurbelwelle 13 bzw. die Antriebswelle 32 mit einer ungleichförmigen Winkelgeschwindigkeit angetrieben wird, wobei die Ungleichförmigkeit wiederum nach einem vorgegebenen Bewegungsgesetz verläuft, die vorzugsweise der Winkelgeschwindigkeit eines auf einer Epizykloide oder Hypozykloide mit gleicher Umfangsgeschwindigkeit geführten Punktes entspricht.

Vorrichtungen gem. Fig. 12 + 13 können ebenfalls durch Verwendung von Hohlwellen zur Bearbeitung von Stangematerial eingesetzt werden. Eine kinematische Umkehr, d. h. das Werkstück beschreibt eine Hypo- bzw. Epizykloidenbahn, und das Werkzeug eine einfache Kreisbahn, ist möglich.

Als Sonderfall ist es auch möglich, den Radius $R_2$ mit « Null » einzustellen, so daß das Werkzeug eine Kreisbahn beschreibt. Hierbei wird die Werkzeugwelle 17 mit der Kurbelwelle 13 fest gekoppelt und die Kurbelwelle wird mit der Drehzahl und der Drehrichtung angetrieben, mit der sonst die Werkzeugwelle 17 angetrieben wird. Hierbei entstehen reine Epi- bzw. Hypozykloiden als Werkstückkontur.

Werden Werkzeug- und Werkstückdrehzahl gleich groß gewählt, so entstehen je nach Einstellung kreisrunde oder polygonale Exenter (Kurbelwelle) als Werkstückkontur.


**Patentansprüche**

1. Verfahren zur Herstellung von Werkstücken mit polygonaler Außen- und/oder Innenkontur, vorzugsweise durch spanabhebende Bearbeitung, wobei das zu bearbeitende Werkstück um eine ortsfeste Achse (4) mit konstanter Geschwindigkeit rotiert, während das Werkzeug (20) auf einer in sich geschlossenen Bahnkurve (6) geführt wird, wobei die Drehgeschwindigkeit des Werkstücks und die Umlaufgeschwindigkeit des Werkzeugs (20) auf seiner Bahnkurve voneinander abhängig sind und wobei

10

ferner das Werkzeug (20) während des gesamten Umlaufs am Werkstück angreift, wobei zur Erzeugung einer vorgegebenen Polygonkontur die ortsfeste Drehbewegung des Werkstücks und die Bewegung des Werkzeugs (20) auf seiner exzentrisch zur Werkstückdrehachse verlaufenden Bahnkurve (6) überlagert werden und wobei die Bahnkurve (6) die Drehachse (4) des Werkstücks umschließt, dadurch gekennzeichnet, daß das Werkzeug (20) auf einer von einem Kreis abweichenden, in sich geschlossenen Bahnkurve (6) umlaufend geführt wird, die von dem Werkzeug (20) mit einer nach einem vorgegebenen Bewegungsgesetz jeweils während eines Umlaufs sich ändernden Bewegungsgeschwindigkeit durchlaufen wird und daß die Bahnkurve (6) des Werkzeugs (20) im Raum dadurch erzeugt wird, daß das Werkzeug (20) auf einer ersten Kreisbahn $R_1$ geführt wird, mit vorzugsweise konstanter Winkelgeschwindigkeit, bezogen auf die Drehachse dieser Kreisbahn, wobei die Drehachse ihrerseits, je nach der gewünschten Bahnkurve, gleichsinnig oder gegenläufig auf einer zweiten Kreisbahn $R_2$ umläuft, und daß zur Veränderung der Form der Bahnkurve der Radius der ersten Kreisbahn und der Radius der zweiten Kreisbahn sowie die Phasenlage der umlaufenden Radien $R_1$ und $R_2$ frei einstellbar sind.

2. Verfahren nach Anspruch 1, dadurch gekennzeichnet, daß die Bahnkurve (6) eine Epizykloide, insbesondere eine Pascalsche Kurve ist, wobei die Drehachse der Kreisbahn $R_1$ gleichsinnig aber mit höherer, vorzugsweise konstanter Winkelgeschwindigkeit auf der zweiten Kreisbahn $R_2$ umläuft und daß vorzugsweise der Radius $R_2$ der zweiten Kreisbahn kleiner als der Radius $R_1$ der ersten Kreisbahn ist.

3. Verfahren nach Anspruch 1, dadurch gekennzeichnet, daß die Bahnkurve (6) eine Hypozykloide, insbesondere eine Ellipse ist, wobei die Drehachse der Kreisbahn $R_1$ gegenläufig mit mindestens gleicher, vorzugsweise konstanter Winkelgeschwindigkeit, auf der zweiten Kreisbahn $R_2$ umläuft.

4. Vorrichtung zur Herstellung von Werkstücken mit polygonaler Außen- und/oder Innenkontur, mit einer drehbar gelagerten, angetriebenen Werkstückaufnahme (7) und einem Werkzeug (20), das entlang einer geschlossenen Bahnkurve geführt ist und das mit dem Antrieb der Werkstückaufnahme (7) in Verbindung steht, insbesondere zur Durchführung der Verfahren nach den Ansprüchen 1 bis 3, gekennzeichnet durch einen in einem Gestell (8) drehbar gelagerten, angetriebenen Kurbelarm (12), mit dessen Kurbelzapfen (11) ein Lager (11') in bezug auf seinen Abstand R2 zur Kurbelwelle (13) einstellbar verbunden ist und einen mit dem Lager (11') um eine parallele Kurbelwelle liegende Drehachse (17) drehbar verbundenen Werkzeugträger (19) mit einer Werkzeugaufnahme, deren Abstand $R_1$ zur Drehachse (17) des Werkzeugträgers (19) einstellbar ist, sowie durch Antriebmittel (18), durch die Werkzeugträger (19) und Kurbelarm (12) hinsichtlich Drehrichtung, Winkelgeschwindigkeit und Phasenlage zueinander in Abhängigkeit voneinander antreibbar sind, sowie durch eine mit dem Gestell (8) verbundene Verstelleinrichtung (15), mit der der radiale Abstand allseitig und/oder die Ausrichtung der Drehachse des Kurbelarmes (12) zur Werkstückdrehachse (4) einstellbar ist.

5. Vorrichtung nach Anspruch 4, dadurch gekennzeichnet, daß das Lager (11') für den Werkzeugträger (19) durch einen Lagerträger (10) gebildet wird, der über eine vorzugsweise parallelgeführte Momentenstütze (26) am Gestell (8) abgestützt ist und im wesentlichen eine der Bewegung des Kurbelzapfens (11) entsprechende translatorische Kreisbahn mit dem Radius $R_2$ beschreibt.

6. Vorrichtung nach Anspruch 4, dadurch gekennzeichnet, daß das Lager (11') für den Werkzeugträger (19) durch den Kurbelzapfen (11) gebildet wird, wobei die Drehachse (17) des Werkzeugträgers mit der Achse des Kurbelzapfens zusammenfällt, und daß am Lager (11') ferner ein Lagerträger (10') für ein Getriebe (18') angelenkt ist, der über eine vorzugsweise parallelführende Momentenstütze (26) am Gestell (8) abgestützt ist.

7. Vorrichtung nach Anspruch 6, dadurch gekennzeichnet, daß das Getriebe (18) als Rädergetriebe ausgebildet ist, dessen Antriebsrad (22) mit dem Kurbelzapfen (11) fest verbunden ist und wenigstens ein Zwischenrad (23) antreibt, das am Lagerträger (10') gelagert ist, und daß das Zwischenrad (23) mit einem Abtriebsrad (24) in Verbindung steht, das mit der Welle (17) des Werkzeugträgers (19) fest verbunden ist.

8. Vorrichtung nach Anspruch 4, dadurch gekennzeichnet, daß die Welle des Kurbelarmes (12) als Hohlwelle (29) ausgebildet ist, durch die eine mit der Welle (17) des Werkzeugträgers (19) verbundene Antriebswelle (31, 32) hindurchgeführt ist, und daß die Hohlwelle (29) und die Antriebswelle (32) in dem Gestell (8) gelagert sind, das mit der Verstelleinrichtung (15) zur allseitigen radialen Einstellung der Exzentrizität und/oder Ausrichtung der Drehachse (17) des Werkzeugträgers (19) zur Drehachse des Kurbelarmes (12) verbunden sind, und daß über ein Getriebe (18') zwischen Antriebswelle (31, 32) und der Hohlwelle (29) Drehzahlverhältnis, Drehrichtung und Phasenlage von Werkzeugträgerwelle (17) einerseits und Hohlwelle (29) andererseits je nach der gewünschten Bahnkurve des Werkzeugs vorgebbar sind.

9. Vorrichtung nach einem der Ansprüche 4 bis 8, dadurch gekennzeichnet, daß das Antriebsmittel (18) als Rädergetriebe ausgebildet ist, dessen Antriebsrad (39) mit der Kurbelwelle (13) fest verbunden ist und wenigstens ein Zwischenrad (40, 41) antreibt, das an einem Lagerträger (8) gelagert ist und daß das Zwischenrad (40, 41) eine parallel zur ersten Kurbelwelle (13) angeordnete zweite Kurbelwelle (33) antreibt, deren Kurbelarm (34) die gleiche Länge aufweist wie der Kurbelarm (12) der ersten Kurbelwelle (13) und daß mit dem Kurbelzapfen (36) der zweiten Kurbelwelle (33) ein Antriebsrad (37, 37') fest verbunden ist, das mit einem Abtriebsrad (38, 38') im Eingriff steht, das mit der Drehwelle (17) des Werkzeugträgers (19) verbunden ist.

10. Vorrichtung nach Anspruch 9, dadurch gekennzeichnet, daß das Rädergetriebe (18) und das Antriebsrad (37) an der zweiten Kurbel (34) und das zugehörige Abtriebsrad (38) an der Drehwelle (17) des Werkzeugträgers (19) so ausgelegt sind, daß die erste Kurbelwelle (13) und die Drehwelle (17) gegenläufig

11

und mit vorzugsweise gleicher Drehzahl umlaufen.

11. Vorrichtung nach Anspruch 9, dadurch gekennzeichnet, daß das Rädergetriebe (18) und das Antriebsrad (37') an der zweiten Kurbel (34) sowie das Abtriebsrad (38') an der Drehwelle (17) des Werkzeugträgers (19) so ausgelegt sind, daß die erste Kurbelwelle (13) gegenüber der Drehwelle (17) gleichsinnig und mit höherer, vorzugsweise doppelter Drehzahl umläuft.

**Claims**

1. Method for the production of workpieces with a polygonal external and/or internal contour, preferably by chip-removal cutting, in which the workpiece which is to be processed rotates at a constant speed about a fixed axis (4), while the tool (20) is guided on a curved path (6) which is closed upon itself, the turning speed of the workpiece and the rotational speed of the tool (20) on its curved path being dependent on each other, and in which, in addition, the tool (20) acts upon the workpiece during the entire revolution, and in order to produce a predetermined polygonal contour, the fixed rotational movement of the workpiece and the movement of the tool (20) on its curved path (6) running eccentrically to the axis of rotation of the workpiece are superimposed and the path curve (6) surrounding the axis of rotation (4) of the workpiece, characterised in that the tool (20) is guided around a curved path (6) which is closed upon itself and deviates from a circle, and which is passed through by the tool (20) at a speed of motion which in accordance with a predetermined law of motion alters in each case during one revolution and that the curved path (6) of the tool (20) is produced in space such that the tool (20) is guided on a first orbit $R_1$, at a preferably constant angular speed, in relation to the axis of rotation of this orbit, and the axis of rotation, in turn, depending on the desired path curve, revolves in the same direction or in the contrary direction on a second orbit $R_2$, and that to alter the shape of the curved path, the radius of the first orbit and the radius of the second orbit and also the phase relationship of the revolving radii $R_1$ and $R_2$ are freely adjustable.

2. Method according to Claim 1, characterised in that the curved path (6) is an epicycloid, in particular a Pascal's curve, the axis of rotation of the orbit $R_1$ revolving in the same direction but at a higher, preferably constant, angular speed on the second orbit $R_2$, and that preferably the radius $R_2$ of the second orbit is smaller than the radius $R_1$ of the first orbit.

3. Method according to Claim 1, characterised in that the curved path (6) is a hypocycloid, in particular an ellipse, the axis of rotation of the orbit $R_1$ revolving in the opposite direction with at least an identical, preferably constant, angular speed, on the second orbit $R_2$.

4. Device for the production of workpieces with a polygonal external and/or internal contour, with a rotatably mounted, driven workpiece holder (7) and a tool (20), which is guided along a closed curved path and which is connected with the drive of the workpiece holder (7), in particular for carring out the method according to Claims 1 to 3, characterised by a driven crank arm (12) which is rotatably mounted in a stand (8) and with the crankpin (11) of which a bearing (11') is adjustably connected in relation to its distance R2 from the crankshaft (13) and by a tool carrier (19) which is connected with the bearing (11') so as to be rotatable about an axis of rotation (17) lying parallel to the crankshaft with a tool holder, the distance $R_1$ of which from the axis of rotation (17) of the tool carrier (19) is adjustable, and by driving means (18) through which the tool carrier (19) and crank arm (12) can be driven in dependence upon one another as regards direction of rotation, angular speed and phase relationship to each other, and also by an adjusting device (15), connected with the stand (8), by which the radial distance on all sides and/or the alignment of the axis of rotation of the crank arm (12) to the axis of rotation (4) of the workpiece is adjustable.

5. Device according to Claim 4, characterised in that the bearing (11') for the tool carrier (19) is formed by a bearing carrier (10), which is supported via a preferably parallel guided torque support (26) on the stand (8) and substantially describes a translatory orbit, corresponding to the movement of the crankpin (11), with the radius $R_2$.

6. Device according to Claim 4, characterised in that the bearing (11') for the tool carrier (19) is formed by the crankpin (11), whereby the axis of rotation (17) of the tool carrier coincides with the axis of the crankpin, and that on the bearing (11') in addition a bearing carrier (10') for a gearing (18') is articulated, which carrier is supported on the stand (8) via a preferably parallel guiding torque support (26).

7. Device according to Claim 6, characterised in that the gearing (18) is constructed as a wheel gearing, the drive wheel (22) of which is fixedly connected with the crankpin (11) and drives at least one intermediate wheel (23) which is mounted on the bearing carrier (10'), and that the intermediate wheel (23) is connected with a drive wheel (24), which is fixedly connected with the shaft (17) of the tool carrier (19).

8. Device according to Claim 4, characterised in that the shaft of the crank arm (12) is constructed as a hollow shaft (29), through which is passed a drive shaft (31, 32) which is connected with the shaft (17) of the tool carrier (19), and that the hollow shaft (29) and the drive shaft (32) are mounted in the stand (8), connected with the adjusting device (15) for the radial adjustment of the eccentricity on all sides and/or alignment of the axis of rotation (17) of the tool carrier (19) to the axis of rotation of the crank arm (12), and that via a gearing (18') between the drive shaft (31, 32) and the hollow shaft (29), the rotational speed

0 135 709

ratio, direction of rotation and phase relationship of the tool carrier shaft (17) on the one hand and the hollow shaft (29) on the other hand can be established according to the desired curved path of the tool.

9. Device according to one of Claims 4 to 8, characterised in that the driving means (18) is constructed as a wheel gearing, the drive wheel (39) of which is fixedly connected with the crankshaft (13) and drives at least one intermediate wheel (40, 41), which is mounted on a bearing carrier (8) and that the intermediate wheel (40, 41) drives a second crankshaft (33) arranged parallel to the first crankshaft (13), the crank arm (34) of which has the same length as the crank arm (12) of the first crankshaft (13) and that a drive wheel (37, 37') is fixedly connected with the crankpin (36) of the second crankshaft (33), which drive wheel is in engagement with a drive wheel (38, 38'), which is connected with the rotary shaft (17) of the tool carrier (19).

10. Device according to Claim 9, characterised in that the wheel gearing (18) and the drive wheel (37) are arranged on the second crank (34) and the associated drive wheel (38) is arranged on the rotary shaft (17) of the tool carrier (19) such that the first crank shaft (13) and the rotary shaft (17) revolve in contrary directions and preferably at the same rotational speed.

11. Device according to Claim 9, characterised in that the wheel gearing (18) and the drive wheel (37') are arranged on the second crank (34) and the drive wheel (38') is arranged on the rotary shaft (17) of the tool carrier (19) such that the first crankshaft (13) revolves in the same direction with respect to the rotary shaft (17) and at a higher, preferably double, rotational speed.


**Revendications**

1. Procédé permettant de réaliser des pièces à contour extérieur et/ou intérieur polygonal, de préférence par usinage par enlèvement de copeaux, selon lequel la pièce à usiner tourne à vitesse constante autour d'un axe fixe (4), tandis que l'outil (20) est guidé suivant une trajectoire fermée sur elle-même (6), la vitesse de rotation de la pièce et la vitesse de révolution de l'outil (20) sur sa trajectoire étant dépendantes l'une de l'autre et l'outil (20) agissant en outre sur la pièce pendant tout le mouvement de révolution, tandis que, pour produire un contour polygonal préfixé, le mouvement de rotation à axe fixe de la pièce et le mouvement de l'outil (20) sur sa trajectoire (6) qui se déroule de manière excentrique par rapport à l'axe de rotation de la pièce sont superposés et que la trajectoire (6) fait le tour de l'axe de rotation (4) de la pièce, caractérisé en ce que l'outil (20) est guidé dans son mouvement de révolution suivant une trajectoire fermée sur elle-même (6) s'écartant d'un cercle et qui est parcourue par l'outil (20) à une vitesse de déplacement qui varie à chaque fois pendant un mouvement de révolution suivant une loi préfixée de déplacement, et en ce que la trajectoire (6) de l'outil (20) est produite dans l'espace par le fait qu'on guide cet outil (20) suivant une première orbite circulaire R1, de préférence à une vitesse angulaire qui est constante, rapportée à l'axe de rotation de cette orbite circulaire, tandis que, pour sa part, l'axe de rotation parcourt une seconde orbite circulaire R2, dans le même sens ou dans le sens opposé en fonction de la trajectoire à chaque fois souhaitée, et par le fait que, pour faire varier la forme de la trajectoire, le rayon de la première orbite circulaire et le rayon de la seconde orbite circulaire, ainsi que la position déphasée relative des rayons R1 et R2 décrivant un mouvement de révolution sont réglables librement.

2. Procédé selon la revendication 1, caractérisé en ce que la trajectoire (6) est une épicycloïde, notamment une courbe de Pascal, l'axe de rotation de l'orbite circulaire R1 effectuant un mouvement de révolution sur la seconde orbite circulaire R2 dans le même sens, mais à une vitesse angulaire plus élevée, de préférence constante, et en ce que de préférence le rayon R2 de la seconde orbite circulaire est plus petit que le rayon R1 de la première orbite circulaire.

3. Procédé selon la revendication 1, caractérisé en ce que la trajectoire (6) est une hypocycloïde, notamment une ellipse, l'axe de rotation de l'orbite circulaire R1 effectuant un mouvement de révolution sur la seconde orbite circulaire R2 dans le sens opposé et avec une vitesse angulaire au moins égale, de préférence constante.

4. Dispositif permettant de réaliser des pièces à contour extérieur et/ou intérieur polygonal, comprenant un porte-pièce (7) monté rotatif et entraîné et un outil (20) qui est guidé le long d'une trajectoire fermée et qui est en liaison avec l'entraînement du porte-pièce (7), notamment pour la mise en œuvre du procédé selon les revendications 1 à 3, caractérisé par un bras de manivelle de vilebrequin (12) qui est monté rotatif dans un bâti (8) et est entraîné, et avec le maneton (11) duquel est relié un palier (11') de manière réglable en ce qui concerne sa distance R2 par rapport à l'arbre de vilebrequin (13), et par un support d'outil (19) qui est relié au palier (11') de façon à pouvoir tourner autour d'un axe de rotation (17) disposé parallèlement à l'arbre de vilebrequin et qui comprend un porte-outil dont l'écartement R1 par rapport à l'axe de rotation (17) du support d'outil (19) est réglable, ainsi que par des moyens d'entraînement (18) à l'aide desquels le support d'outil (19) et le bras de manivelle (12) peuvent être entraînés de manière dépendante l'un de l'autre en ce qui concerne la direction de rotation, la vitesse angulaire et la position déphasée relative de l'un par rapport à l'autre, ainsi que par un dispositif de réglage (15) relié au bâti (8) et à l'aide duquel la distance radiale en tous sens de l'axe de rotation du bras de manivelle (12) par rapport à l'axe de rotation (4) de la pièce et/ou l'orientation de cet axe du bras par rapport à cet axe de la pièce est réglable.

13

5. Dispositif selon la revendication 4, caractérisé en ce que le palier (11') prévu pour le support d'outil (19) est formé par un porte-palier (10) qui s'appuie sur le bâti (8) par l'intermédiaire d'un appui résistant aux moments (26) de préférence guidé parallèlement et qui décrit pour l'essentiel une orbite circulaire translatoire de rayon R2 et correspondant au déplacement du maneton (11).

6. Dispositif selon la revendication 4, caractérisé en ce que le palier (11') prévu pour le support d'outil (19) est formé par le maneton (11), l'axe de rotation (17) du support d'outil coïncidant avec l'axe de ce maneton, et en ce qu'il est en outre articulé sur ce palier (11') un porte-palier (10') prévu pour un mécanisme de transmission (18') qui s'appuie sur le bâti (8) par l'intermédiaire d'un appui résistant aux moments (26) assurant de préférence un guidage parallèle.

7. Dispositif selon la revendication 6, caractérisé en ce que le mécanisme de transmission (18) est agencé sous la forme d'un train d'engrenages dont la roue menante (22) est rendue rigidement solidaire du maneton (11) et entraîne au moins une roue intermédiaire (23) qui est montée à palier sur le porte-palier (10'), et en ce que cette roue intermédiaire (23) est en liaison avec une roue menée (24) qui est rigidement solidaire de l'arbre (17) du support d'outil (19).

8. Dispositif selon la revendication 4, caractérisé en ce que l'arbre du vilebrequin (12) est agencé sous la forme d'un arbre creux (29) que traverse un arbre d'entraînement (31, 32) relié à l'arbre (17) du support d'outil (19), et en ce que cet arbre creux (29) et l'arbre d'entraînement (32) sont montés à palier dans le bâti (8), qui est relié au dispositif de réglage (15) permettant le réglage radial en tous sens de l'excentricité et/ou l'orientation de l'axe de rotation (17) du support d'outil (19) par rapport à l'axe de rotation du bras de manivelle (12), et en ce que, par l'intermédiaire d'un mécanisme de transmission (18') disposé entre l'arbre d'entraînement (31, 32) et l'arbre creux (29), le rapport des vitesses de rotation, la direction de rotation et la position déphasée relative de l'arbre (17) du support d'outil d'une part et de l'arbre creux (29) d'autre part peuvent être préfixés en fonction à chaque fois de la trajectoire voulue de l'outil.

9. Dispositif selon l'une des revendications 4 à 8, caractérisé en ce que les moyens d'entraînement (18) sont agencés sous la forme d'un train d'engrenages dont la roue menante (39) est rigidement solidaire de l'arbre de vilebrequin (13) et entraîne au moins une roue intermédiaire (40, 41) qui est montée à palier sur un porte-palier (8), et en ce que cette roue intermédiaire (40, 41) entraîne un second arbre de vilebrequin (33) disposé parallèlement au premier arbre de vilebrequin (13) et dont le bras de manivelle (34) présente la même longueur que le bras de manivelle (12) du premier vilebrequin (13), et en ce qu'est rendue rigidement solidaire du maneton (36) de ce second vilebrequin (33) une roue menante (37, 37') qui engrène avec une roue menée (38, 38') qui est reliée à l'arbre de rotation (17) du support d'outil (19).

10. Dispositif selon la revendication 9, caractérisé en ce que le train d'engrenages (18) et la roue menante (37) disposée sur le second bras de manivelle (34), ainsi que la roue menée associée (38) disposée sur l'arbre de rotation (17) du support d'outil (19) sont agencés de façon que le premier vilebrequin (13) et l'arbre de rotation (17) se déplacent suivant un mouvement de révolution en sens opposé et avec une vitesse de rotation de préférence égale.

11. Dispositif selon la revendication 9, caractérisé en ce que le train d'engrenages (18) et la roue menante (37') disposée sur le second bras de manivelle (34), ainsi que la roue menée (38') disposée sur l'arbre de rotation (17) du support d'outil (19) sont agencés de façon que le premier vilebrequin (13) soit entraîné suivant un mouvement de révolution de même sens par rapport à l'arbre de rotation (17) et avec une vitesse de rotation plus élevée, de préférence double.

Fig.1

Fig.2

Fig. 3

0 135 709

Fig.4

Fig.5

0 135 709

Fig.6

0 135 709

*Fig. 7*

0 135 709

Fig. 8

Fig. 9

Fig. 10

Fig. 11

Fig. 12

Fig. 13